# EUROPÄISCHE PATENTSCHRIFT

(11) **EP 1 507 675 B1**
(45) Veröffentlichungstag und Bekanntmachung des Hinweises auf die Patenterteilung: **04.03.2009**
(21) Anmeldenummer: 03724865.5
(22) Anmeldetag: 11.04.2003
(51) Int. Cl.: B60J 7/14, B60J 7/20, B60J 7/08

(54) **VERDECK FÜR EIN CABRIOLET-FAHRZEUG**
FOLDING TOP FOR A CABRIOLET VEHICLE
CAPOTE DE CABRIOLET

(30) Priorität: 12.04.2002 DE 10216401; 24.04.2002 DE 10218410; 03.07.2002 DE 10229808; 16.09.2002 DE 10243085
(43) Veröffentlichungstag der Anmeldung: 23.02.2005
(73) Patentinhaber: Edscha Cabrio-Dachsysteme GmbH, 94491 Hengersberg (DE)
(72) Erfinder: OBENDIEK, Klaus, 94032 Passau (DE)
(74) Vertreter: Dammertz, Ulrich
(86) Internationale Anmeldenummer: PCT/DE2003/001215
(87) Internationale Veröffentlichungsnummer: WO 2003/086800

(56) Entgegenhaltungen:
- DE-A- 10 039 683
- DE-A- 10 108 493
- DE-C- 4 435 222
- DE-C- 10 006 290
- DE-C- 19 805 477
- DE-C- 19 934 673
- DE-C- 19 957 427
- US-A1- 2001 040 385

## Beschreibung

Die Erfindung betrifft ein Verdeck für ein Cabriolet-Fahrzeug.

Im modernen Bau von aus mehreren festen Dachteilen bestehenden, automatisch in einem Heckbereich des Fahrzeugs ablegbaren Cabriolet-Verdecken tritt allgemein die Problematik von starren, zueinander raumgreifend bewegbaren Teilen auf. Dabei ist hinsichtlich der Auslegung der relativen Größen der Dachteile, des Bewegungsablaufs der Dachteile zueinander, der Ausmaße des zusammengeklappten und abgelegten Dachs sowie des Aufwandes der vorzusehenden Antriebsvorrichtungen hinsichtlich deren Anzahl und damit verbundener Kosten oft ein Satz von Randbedingungen gewünscht, der simultan erfüllbar ist. So führt etwa bei einigen besonders bevorzugten Ausführungsformen von mehrteiligen Hartschalenklappverdecken die Überschneidung der räumlichen Bewegungen verschiedener Dachteile dazu, daß diese Dachteile nur sequentiell oder quasi-sequentiell verschwenkt werden können, ohne miteinander zu kollidieren.

Aus der Praxis des Baus von Hartschalen-Klappverdecken ist bekannt, zur Erzielung eines sequentiellen Verschwenkens verschiedener Dachteile jeweils separate Antriebsvorrichtungen für die verschiedenen Dachteile vorzusehen.

Um in dem Heckbereich einen Ablageraum für das Verdeck im Zuge einer Öffnungsbewegung freizugeben, wird häufig ein entgegen der Fahrtrichtung aufschwenkbares Heckelement verwendet, wobei zur Erreichung eines kollisionsfreien Bewegungsablaufs eine vor dem Heckelement angeordnete Hutablage separat verschwenkbar vorgesehen sein kann. Das Verschwenken der Hutablage ermöglicht dabei die Bewegung des hinteren Dachteils in den Ablageraum.

DE 198 05 477 C1 beschreibt ein Cabriolet-Fahrzeug mit einem zweiteiligen Hardtop, umfassend ein vorderes, erstes Dachteil und ein hinteres, zweites Dachteil. Das zweite Dachteil ist über einen ersten Lenker und einen zweiten Lenker gelenkig mit der Fahrzeugkarosserie verbunden, wobei die Fahrzeugkarosserie, der erste Lenker, der zweite Lenker und das zweite Dachteil gemeinsam ein als erstes Viergelenk ausgeprägtes Hauptlenkergetriebe ausbilden, dessen Koppel das zweite Dachteil ist. Das erste Dachteil ist über einen dritten Lenker und einen vierten Lenker gelenkig mit dem zweiten Dachteil verbunden, wobei der dritte Lenker, der vierte Lenker, das erste Dachteil und das zweite Dachteil gemeinsam ein zweites Viergelenk ausbilden, dessen Basis das zweite Dachteil und dessen Koppel das erste Dachteil ist. Ein Steuerlenker verbindet den ersten Lenker mit dem vierten Lenker, so dass die Lenkerkinematik insgesamt zwangsgesteuert ist. Bei geschlossenem Verdeck grenzt das zweite Dachteil an ein Heckelement an, das ein Ablagevolumen für die Dachteile im Heckbereich des Kraftfahrzeugs überdeckt.

EP 1 302 351 A2 beschreibt ein Verdeck für ein Cabrioletfahrzeug mit einem ersten, in der geschlossenen Position vorderen Dachteil, einem mittleren Dachteil und einem zweiten, hinteren Dachteil. Das zweite Dachteil umfasst C-Säulen des Cabrioletfahrzeugs und liegt in geschlossenem Zustand auf einem öffnungfähigen Heckelement auf. Das mittlere Dachteil ist über einen ersten Lenker und einen zweiten Lenker mit der Fahrzeugkarosserie schwenkbar verbunden, wobei das mittlere Dachteil, der erste Lenker, der zweite Lenker und die Fahrzeugkarosserie ein Viergelenk bilden. Das zweite Dachteil ist über einen dritten Lenker und einen vierten Lenker schwenkbar mit dem mittleren Dachteil verbunden, wobei das mittlere Dachteil, der dritte Lenker, der vierte Lenker und das zweite Dachteil ein Viergelenk ausbilden. Weiter ist das erste Dachteil über einen Viergelenkmechanismus mit einem fünften Lenker und einem sechsten Lenker mit dem mittleren Dachteil schwenkbar verbunden. Bei einem Ablegen des Verdecks in einem Verdeckkasten im Heckbereich des Fahrzeugs wird das erste Dachteil über das mittlere Dachteil und das zweite Dachteil über das erste Dachteil verlagert.

DE 199 57 427 C1 und US 2001/0006279 A1 beschreiben ein Cabrioletverdeck mit einem ersten Dachteil und einem zweiten Dachteil. Das erste Dachteil umfasst ein Schalenteil, das sich bei geschlossenem Verdeck zwischen einem Windlauf der Frontscheibe und dem zweiten Dachteil erstreckt, sowie ein öffnungsfähiges Sonnendach. Das erste Dachteil ist mittels eines ersten Lenkers mit der Fahrzeugkarosserie verbunden. Das zweite Dachteil liegt bei geschlossenem Verdeck auf einem öffnungsfähigen Heckelement auf und ist mittels eines zweiten Lenkers mit der Fahrzeugkarosserie verbunden. Für ein Öffnen des Verdecks wird das zweite Dachteil mittels des zweiten Lenkers über das erste Dachteil verschwenkt und mit diesem verriegelt, wobei der zweite Lenker für ein Verschwenken des zweiten Dachteils karosserieseitig in einer Führungskulisse verlagert wird. Anschließend werden das erste Dachteil und das zweite Dachteil gemeinsam mittels des ersten Lenkers und des zweiten Lenkers in einem Heckbereich des Fahrzeugs abgelegt, wobei die Fahrzeugkarosserie, der erste Lenker, der zweite Lenker und die Dachteile gemeinsam eine Viergelenkanordnung bilden.

DE 100 06 290 C1 und DE 100 06 296 C1 zeigen jeweils ein ablegbares Verdeck für ein Kraftfahrzeug mit D-Säulen, beispielsweise einen Geländewagen oder eine sogenannte Kombi-Limousine. Das Verdeck umfasst vier Dachteile, von denen die drei bei geschlossenem Verdeck vorderen Dachteile über einen ersten Lenker und einen zweiten Lenker an der Fahrzeugkarosserie angelenkt sind und gemeinsam einen ersten ablegbaren Dachabschnitt ausbilden. Das in Fahrtrichtung erste Dachteil ist mittels einer ersten Viergelenkanordnung an dem in Fahrtrichtung zweiten Dachteil angelenkt und über dieses verlagerbar. Das in Fahrtrichtung dritte Dachteil ist mittels einer zweiten Viergelenkanordnung an dem in Fahrtrichtung zweiten Dachteil angelenkt und unter das zweite Dachteil verlagerbar. Der erste Lenker und der zweite Lenker greifen jeweils an dem in Fahrtrichtung zweiten Dachteil an. Das bei geschlossenem Verdeck in Fahrtrichtung vierte Dachteil ist gelenkig mit D-Säulen des Fahrzeugs verbunden, die widerum schwenkbar an der Fahrzeugkarosserie angelenkt sind. Das vierte Dachteil bildet gemeinsam mit den D-Säulen einen zweiten ablegbaren Dachabschnitt. Bei vollständig geöffnetem Verdeck überdeckt das vierte Dachteil die abgelegten vorderen Dachteile. Ein öffnungsfähiges Heckelement, auf dem das an dem Hauptlenkergetriebe aufgenommene hintere Dachteil aufliegt, ist nicht vorgesehen.

DE 44 35 222 C1 beschreibt ein Verdeck, bei dem das hintere Dachteil zunächst in Fahrtrichtung aufgeschwenkt wird, wonach das Heckelement entgegen der Fahrrichtung geöffnet werden kann, ohne daß notwendig eine separat verschwenkbare Hutablage vorzusehen ist. Nachteilig bei der gezeigten Lösung ist dabei, daß sowohl das hintere Dachteil als auch ein sich in Fahrtrichtung daran anschließendes mittleres Dachteil jeweils separat an der Karosserie des Fahrzeugs angelenkt sind. Um bei der Verschwenkung in Fahrtrichtung nicht mit dem mittleren Dachteil zu kollidieren, umfassen die Anlenkungen des hinteren Dachteils ausfahrbare Hydraulikzylinder, um das hintere Dachteil über das mittlere Dachteil zu heben. Eine solche Ansteuerung ist nicht nur aufwendig und kostspielig, sondern auch störanfällig. Zudem sind weitere Mittel zur Fixierung des hinteren Dachteils in einem geschlossenen Verdeckzustand notwendig, da die zugleich tragende Lenker des Dachteils bildenden Hydraulikzylinder nicht ohne weiteres in ihrer Längsrichtung starr sind. Um auf eine noch größere Anzahl von Antriebseinrichtungen zu verzichten, wird vorgeschlagen, das hintere Dachteil in einer über das mittlere Dachteil verschwenkten Position mit diesem zu verriegeln. Hinsichtlich einer automatisierten Verdecköffnung sind aber auch hierfür aufwendige hydraulische oder elektromechanische Mittel erforderlich.

Es ist die Aufgabe der vorliegenden Erfindung, ein Verdeck für ein Cabriolet-Fahrzeug zu schaffen, bei dem die Flexibilität der zwangsgesteuerten Bewegung von Dachteilen zueinander erhöht ist.

Diese Aufgabe wird von einem Verdeck für Cabriolet-Fahrzeug mit den Merkmalen des Anspruchs 1 gelöst.

Vorteilhaft ist dabei in einer zwangsgesteuerten Verbindung eines ersten und eines zweiten Dachteils zudem eine mechanische Steuervorrichtung vorgesehen, so daß zum einen die Dachteile mittels nur einer einzigen Antriebsvorrichtung simultan bewegt werden können, und zum anderen mittels der mechanischen Steuervorrichtung eine Koordinierung der Bewegung der Dachteile, insbesondere eine zeitliche sequentielle oder quasi-sequentielle Abfolge der einzelnen Bewegungen ohne das Erfordernis zusätzlicher Antriebe ermöglicht ist. Insbesondere ist durch den Verzicht auf zusätzliche Antriebe neben der Kosteneinsparung eine geringere Störanfälligkeit der Gesamtmechanik des Verdecks gewährleistet.

Vorzugsweise wird zudem erreicht, daß eine Öffnungsbewegung eines vorderen oder mittleren Dachteils beginnen kann, bevor das erste Dachteil vollständig über das vordere oder mittlere Dachteil bewegt wurde, so daß insgesamt eine besonders zeitsparende Öffnungsbewegung realisierbar ist.

In einer bevorzugten Ausführungsform eines erfindungsgemäßen Verdecks umfaßt die Steuervorrichtung einen Drehlenker. Auf besonders bevorzugte Weise treibt eine einzelne Krafteinleitungseinheit den Drehlenker an, und der Drehlenker ist über ein erstes Gestänge mit dem ersten Dachteil und über ein zweites Gestänge mit dem zweiten Dachteil verbunden. Auf diese Weise läßt sich ein gegebener Weg der Krafteinleitungseinheit nach dem Prinzip einer projizierten Kreisbewegung auf das erste bzw. das zweite Gestänge jeweils phasenverschoben übertragen. So kann etwa, ausgehend von einer geschlossenen Verdeckstellung, zunächst ein Antrieb des ersten Gestänges und somit des ersten Dachteils erfolgen, wogegen das zweite Gestänge und somit das zweite Dachteil erst nach einer erfolgten Verdrehung des Drehlenkers merklich angetrieben wird. Wird die Winkelstellung alpha des Drehlenkers in der Ausgangsstellung als null Grad bezeichnet, so kann, in erster Näherung, ein erreichbarer Faktor bei der Übertragung des Bewegungshubs für das erste Gestänge proportional zu sinus (alpha + delta) und der Faktor der Übertragung des Bewegungshubs für das zweite Gestänge proportional zu sinus (alpha + delta + phi) sein, wobei die Phasenverschiebung phi bevorzugt in der Größenordnung von neunzig Grad ist und delta ein konstanter, vorgegebener Ursprungswinkel ist. Delta kann bevorzugt von null abweichen und insbesondere etwas kleiner als null sein, damit zu Anfang des Bewegungsvorgangs möglichst lange eine großer Übertragungsfaktor für das erste Gestänge gegeben ist.

Besonders bevorzugt ist das erste Dachteil ein vorderes Dachteil und das zweite Dachteil ein hinteres Dachteil des Verdecks ist, wobei ein mittleres Dachteil in einem geschlossenen Verdeckzustand zwischen dem ersten Dachteil und dem zweiten Dachteil angeordnet ist. Dabei ist bevorzugt das erste Dachteil über ein vorderes Viergelenk mit dem mittleren Dachteil verbunden und das zweite Dachteil ist über ein hinteres Viergelenk mit dem mittleren Dachteil verbunden. Insbesondere bei der hierbei vorliegenden entgegengesetzten Bewegung des ersten Dachteils gegenüber dem zweiten Dachteil, die bedingt durch die Viergelenke zudem besonders raumgreifend ausfällt, ist die erfindungsgemäße Vorsehung der mechanischen Steuervorrichtung vorteilhaft, da hierdurch eine besonders große Freiheit bei der Dimensionierung der Dachteile und bei der Auslegung der Wegkurven der Dachteile erreichbar ist.

Vorteilhaft kann das mittlere Dachteil über ein Hauptviergelenk mit der Karosserie des Fahrzeugs verbunden sein, so daß während oder nach einer Verschwenkung des ersten und des zweiten Dachteils über das mittlere Dachteil eine gemeinsame Verschwenkung der zu einem Paket angeordneten Dachteile in einen heckseitigen Ablagebereich mittels des Hauptviergelenks erfolgen kann.

Besonders vorteilhaft liegt zumindest ein Lenker des vorderen Viergelenks in einem geschlossenen Verdeckzustand außenseitig an dem mittleren Dachteil an. Hierdurch ist hinsichtlich einer raumsparenden Ablage des geöffneten Verdecks vorteilhaft erreicht, daß ein die Ansteuerung des ersten, vorderen Dachteils tragende Lenker besonders kurz ausgelegt sein kann, da der außenseitige Lenker des vorderen Viergelenks eine relativ zu dem mittleren Dachteil weitgehend zurückverlagerte Anordnung des vorderen Viergelenks erlaubt. Insbesondere führt diese Vorsehung des außenliegenden Lenkers aber auch zu einem sehr vorteilhaften Einsatz der Steuervorrichtung, da letztlich durch den außenliegenden Lenker eine besonders raumgreifende Verschwenkung des ersten Dachteils bedingt ist, die ohne die Steuervorrichtung bei einem bevorzugten Verdeck zu einer Kollision mit dem zweiten, hinteren Dachteil führen würde.

Durch die erfindungsgemäße Aufnahme der Dachteile an einem gemeinsamen Hauptlenkergetriebe, welches gegenüber der Karosserie des Fahrzeugs bewegbar ist, wird vorteilhaft ein Verdeck geschaffen, das hinsichtlich seiner weiteren Ausgestaltung eine besonders große Flexibilität aufweist. Aufgrund der Möglichkeit des Vorsehens einer mit dem Heckelement einstückig ausgebildeten Hutablage bzw. Abdeckung eines unter dem Verdeck befindlichen hinteren Bereichs des Passagierraums kann auf eine sonst erforderliche aufwendige separate Verschwenkung des Hutablagenbereichs verzichtet werden.

Vorteilhaft liegt dabei das zweite Dachteil in einem geschlossenen Verdeckzustand dichtend von oben auf dem Heckelement auf und ist in einem ersten Abschnitt einer Verdecköffnungsbewegung von dem Heckelement abhebbar, so daß zum einen eine einfache Dichtung des Verdecks in seinem Heckbereich ermöglicht ist und zum anderen eine frühzeitige Freigabe des Heckelement zu einer zeitgleichen Bewegung der Verdeckteile und des Heckelements genutzt werden kann. Besonders einfach ist dabei das Heckelement zur Freigabe eines heckseitigen Ablagebereichs für das Verdeck entgegen der Fahrtrichtung aufschwenkbar.

Bei dem erfindungsgemäßen Verdeck sind mindestens beide Dachteile gegenüber dem Hauptlenkergetriebe verlagerbar. Auf diese Weise kann unter anderem eine Paketbildung der Dachteile erfolgen, bevor das Paket der Dachteile mittels des Hauptlenkergetriebes in den Ablagebereich verschwenkt wird.

Vorteilhaft sind dabei das erste Dachteil und das zweite Dachteil mittels jeweils eines ersten und eines zweiten Lenkergetriebes an dem Hauptlenkergetriebe aufgenommen, so daß die Dachteile gegenüber dem Hauptlenkergetriebe und aufeinander zu verschwenkbar sind.

In einer besonders einfachen und hinsichtlich der Kinematik stabilen Realisierung eines erfindungsgemäßen Verdecks sind mindestens eines der Dachteile oder auch beide Dachteile an einem Traglenker des Hauptlenkergetriebes aufgenommen. Ein solcher Traglenker kann zum Beispiel die Koppel eines einfachen Hauptviergelenks sein. Das Hauptlenkergetriebe kann aber je nach gewünschter Verdeckbewegung auch aufwendiger, beispielsweise als Siebengelenk, ausgebildet sein. Die Dachteile können dabei wie vorgeschlagen auf einem gemeinsamen Traglenker fußen oder auch an verschiedenen Lenkern des Hauptlenkergetriebes angelenkt sein. In letzterem Fall wird eine Verschwenkung des Hauptlenkergetriebes zumindest in einem geringen Maße auch eine Verschwenkung der Dachteile relativ zueinander bedingen, was jedoch je nach Anwendungsfall gewünscht sein kann.

Besonders vorteilhaft sind die Dachteile mittels einer Zwangssteuerung miteinander verbunden, so daß die Bewegung des einen Dachteils eine Bewegung des anderen Dachteils bedingt. Hierdurch kann die insgesamt erforderliche Anzahl an Antriebseinrichtungen des Verdecks klein gehalten werden.

Vorteilhaft ist, beispielsweise durch entsprechende Auslegung der Lenkergetriebe der Dachteile, das erste Dachteil über das zweite Dachteil bewegbar, um eine günstige Ablageposition und Stapelreihenfolge der Verdeckteile im Heckbereich des Fahrzeugs zu ermöglichen. Alternativ kann aber auch das zweite Dachteil über das erste Dachteil bewegbar sein. Welche der möglichen und durch nur geringe Abwandlungen realisierbaren Stapelreihenfolgen jeweils optimal sind, hängt insbesondere von der durch Gesichtspunkte des Designs vorgegebenen Form der Karosserie und der Verdeckteile ab.

Besonders vorteilhaft hinsichtlich seiner Stabilität ist ein erfindungsgemäßes Verdeck, bei dem ein erstes Dachteil und ein zweites Dachteil jeweils über ein erstes und ein zweites Lenkergetriebe an dem Hauptlenkergetriebe aufgenommen sind, wobei die Dachteile relativ zueinander und jeweils relativ zu dem Hauptlenkergetriebe bewegbar sind. In einer solchen Kombination ist der insgesamt erforderliche Verlagerungsweg bei der Überlagerung der Dachteile recht gleichmäßig auf beide Dachteile verteilt, so daß jedes der Lenkergetriebe der Dachteile relativ klein gehalten werden kann. Insbesondere große Lenkergetriebe weisen den Nachteil einer mangelnden Stabilität auf, die im allgemeinen durch eine unerwünscht massive Auslegung der Lenkerteile und Gelenke kompensiert werden muß.

Vorteilhaft kann auch ein zusätzliches drittes Dachteil vorgesehen sein, um den Passagierraum von großen Fahrzeugen zu überdecken. Ein solches drittes Dachteil kann als mittleres Dachteil zwischen dem ersten Dachteil und dem zweiten Dachteil angeordnet sein. In diesem Fall kann es auf besonders einfache Weise fest mit dem angesprochenen bevorzugten Traglenker verbunden sein.

Alternativ hierzu, was je nach gewünschter Stapelreihenfolge und vorgegebener Dimensionierung der Dachteile vorteilhaft sein kann, kann das dritte Dachteil aber auch als vorderes Dachteil vorgesehen sein, wobei es insbesondere an dem ersten Dachteil aufgenommen sein kann. Hierdurch kann etwa gewährleistet werden, daß das zweite, hintere Dachteil auch bei einem dreiteiligen Verdeck als unterstes Dachteil der Stapelreihenfolge im geöffneten Verdeckzustand angeordnet sein kann.

Besonders bevorzugt kann die Zwangssteuerung, die die Bewegung des ersten Dachteils mit dem zweiten Dachteil verkoppelt, mit einer zuvor beschriebenen Mechanik zur Verzögerung der Bewegung der Dachteile zueinander ausgestattet sein. Hinsichtlich der Vorteile einer solchen Verzögerungsmechanik wird auf die vorhergehende Beschreibung Bezug genommen.

Weitere Vorteile und Merkmale eines erfindungsgemäßen Verdecks ergeben sich aus den nachfolgend beschriebenen Ausführungsbeispielen sowie aus den abhängigen Ansprüchen.

Nachfolgend werden zwei bevorzugte Ausführungsbeispiele eines Verdecks beschrieben und anhand der anliegenden Zeichnungen näher erläutert.
- Fig. 1: zeigt eine schematische Teilansicht eines ersten Ausführungsbeispiels eines nicht erfindungsgemäßen Verdecks von der Seite in einer geschlossenen Verdeckstellung.
- Fig. 2: zeigt das Verdeck aus Fig. 1 in einer die Zusammenwirkung der Bauteile verdeutlichenden Prinzipdarstellung.
- Fig.3: zeigt eine schematische Teilansicht des ersten Ausführungsbeispiels von der Seite in einem ersten Schritt einer Öffnungsbewegung.
- Fig. 4: zeigt das Verdeck aus Fig. 3 in einer die Zusammenwirkung der Bauteile verdeutlichenden Prinzipdarstellung.
- Fig. 5: zeigt eine schematische Teilansicht des ersten Ausführungsbeispiels von der Seite in einem zweiten Schritt einer Öffnungsbewegung.
- Fig. 6: zeigt das Verdeck aus Fig. 5 in einer die Zusammenwirkung der Bauteile verdeutlichenden Prinzipdarstellung.
- Fig. 7: zeigt eine schematische Teilansicht des ersten Ausführungsbeispiels von der Seite in einem dritten Schritt einer Öffnungsbewegung.
- Fig. 8: zeigt das Verdeck aus Fig. 7 in einer die Zusammenwirkung der Bauteile verdeutlichenden Prinzipdarstellung.
- Fig.9: zeigt eine schematische Teilansicht des ersten Ausführungsbeispiels von der Seite in einem vierten Schritt einer Öffnungsbewegung.
- Fig. 10: zeigt das Verdeck aus Fig. 9 in einer die Zusammenwirkung der Bauteile verdeutlichenden Prinzipdarstellung.
- Fig. 11: zeigt eine seitliche Gesamtansicht des Verdecks aus Fig. 1.
- Fig. 12: zeigt eine seitliche Gesamtansicht des Verdecks aus Fig. 9.
- Fig. 13: zeigt das Verdeck aus Fig. 12 in einem weiteren Schritt einer Öffnungsbewegung.
- Fig. 14: zeigt das Verdeck aus Fig. 12 in einem vollständig geöffneten und in einem Heckbereich des Fahrzeugs abgelegten Zustand.
- Fig. 15: zeigt eine Detailansicht eines außenliegenden Lenkers des ersten Ausführungsbeispiels in einer geschlossenen Verdeckstellung.
- Fig. 16: zeigt die Detailansicht aus Fig.15 in einer teilweise geöffneten Stellung.
- Fig. 17: zeigt die Detailansicht aus Fig. 15 in einer vollständig geöffneten Stellung bei maximal verschwenktem außenliegenden Lenker.
- Fig. 18: zeigt eine schematische Ansicht eines zweiten Ausführungsbeispiels eines erfindungsgemäßen Verdecks von der Seite.
- Fig. 19: zeigt das Verdeck aus Fig, 18 nach einem ersten Schritt einer Verdecköffnungsbewegung.
- Fig. 20: zeigt das Verdeck aus Fig, 18 nach einem zweiten Schritt einer Verdecköffnungsbewegung.
- Fig. 21: zeigt das Verdeck aus Fig, 18 nach einem dritten Schritt einer Verdecköffnungsbewegung.
- Fig. 22: zeigt das Verdeck aus Fig, 18 nach einem vierten Schritt einer Verdecköffnungsbewegung.
- Fig. 23: zeigt das Verdeck aus Fig, 18 nach einem fünften Schritt einer Verdecköffnungsbewegung.
- Fig. 24: zeigt das Verdeck aus Fig, 18 nach einem sechsten Schritt einer Verdecköffnungsbewegung.
- Fig. 25: zeigt das Verdeck aus Fig, 18 in einem vollständig geöffneten Zustand, wobei das Verdeck in einem heckseitigen Ablagebereich des Fahrzeugs verstaut ist.
- Fig. 26: zeigt das Verdeck aus Fig. 25 mit geschlossenem Heckelement
- Fig. 27: zeigt das Verdeck aus Fig. 18, wobei ein in das Heckelement integrierter Kofferraumdeckel geöffnet ist.

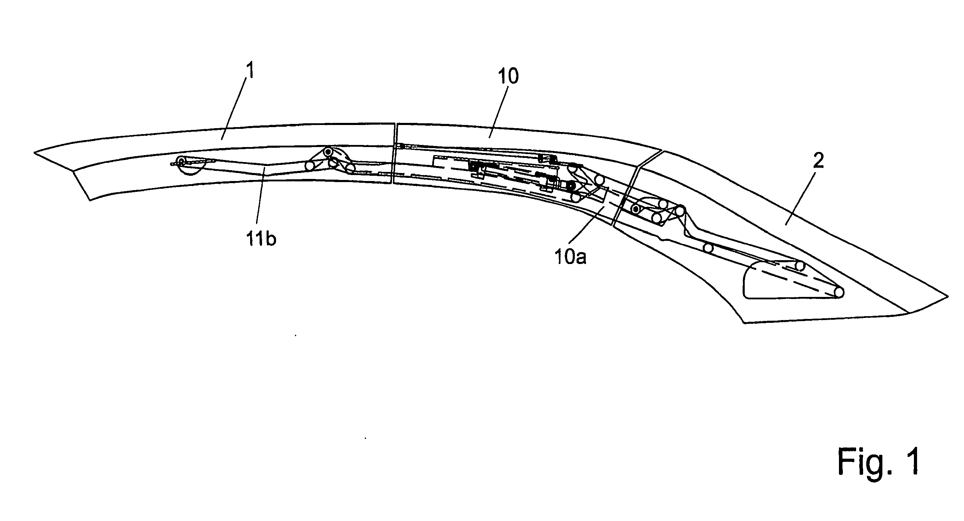

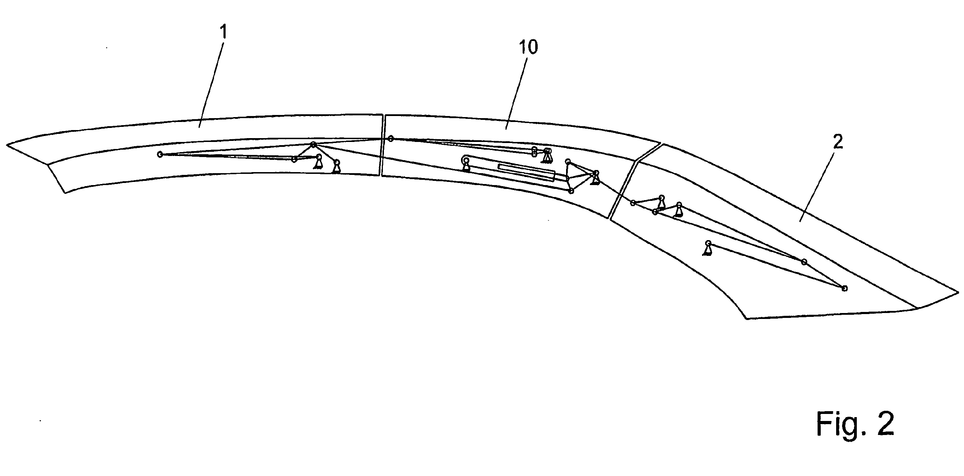

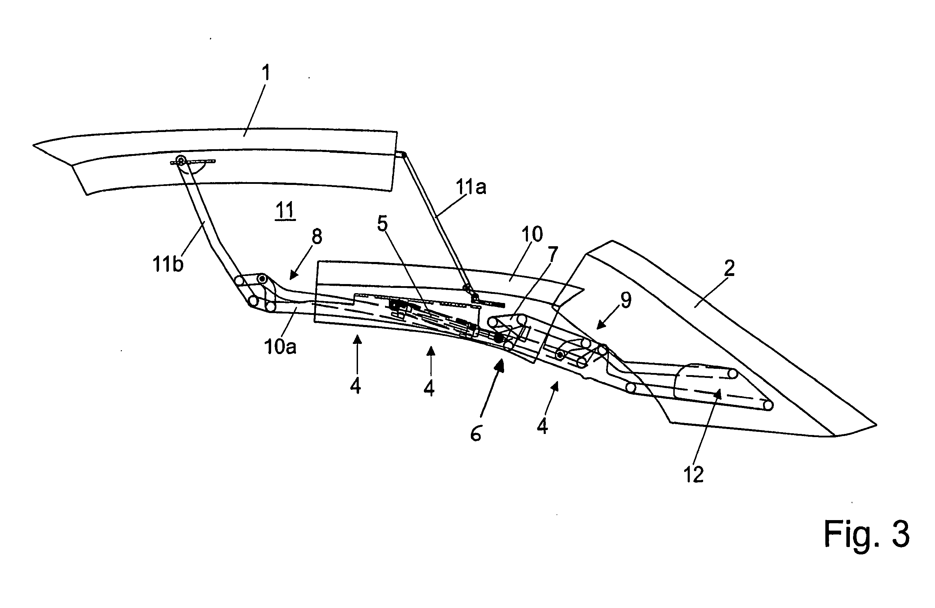

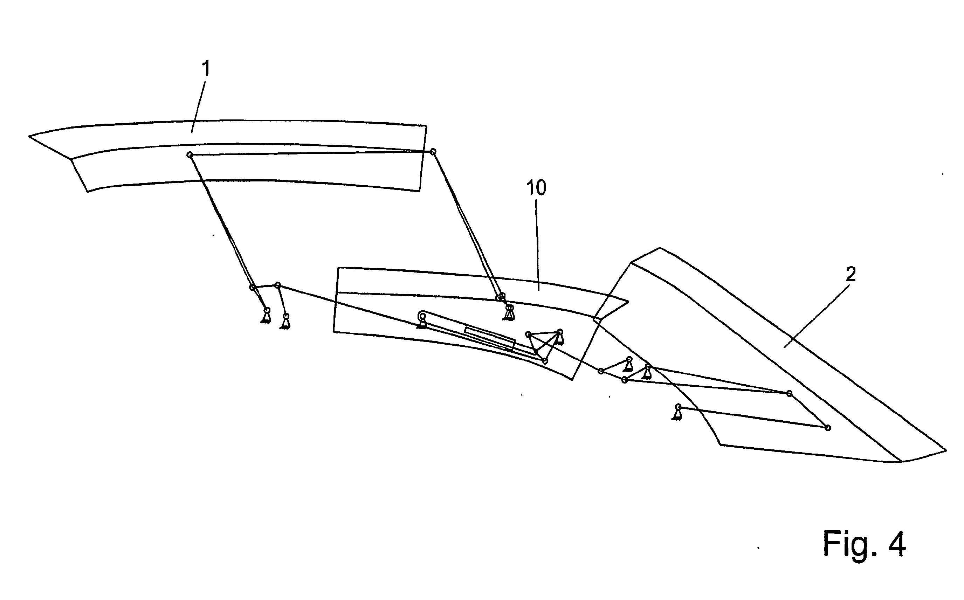

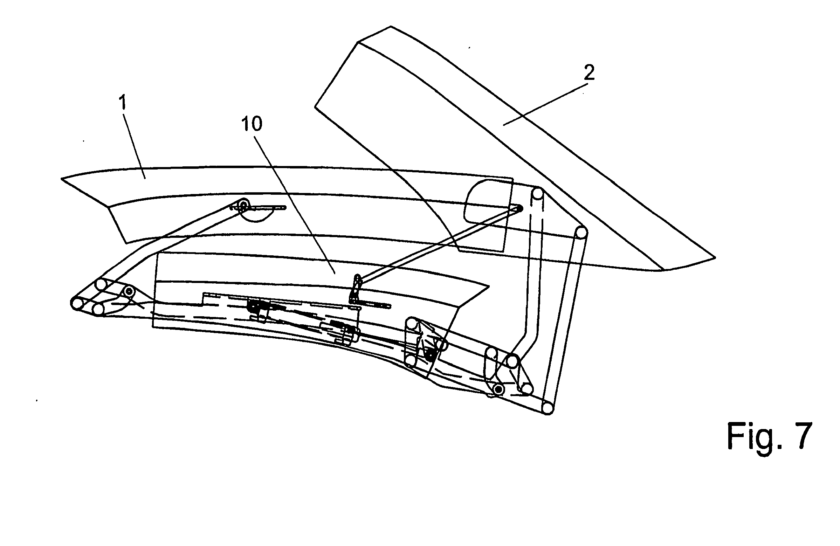

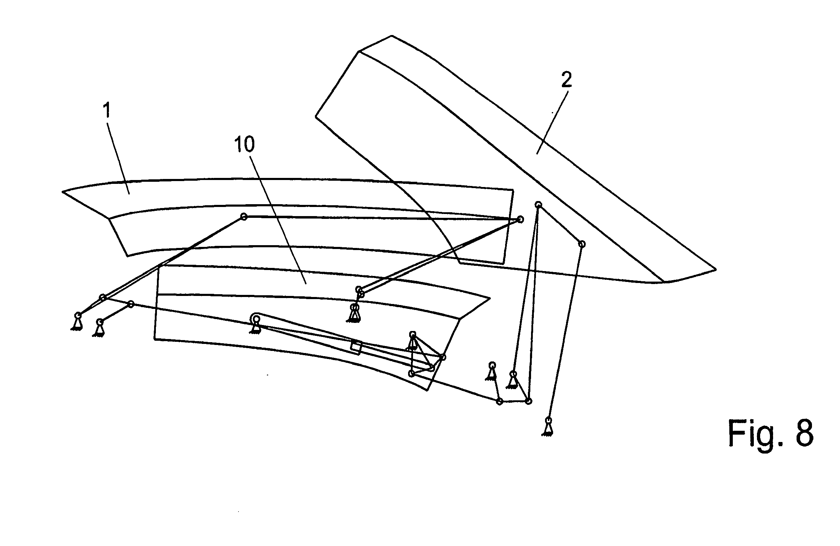

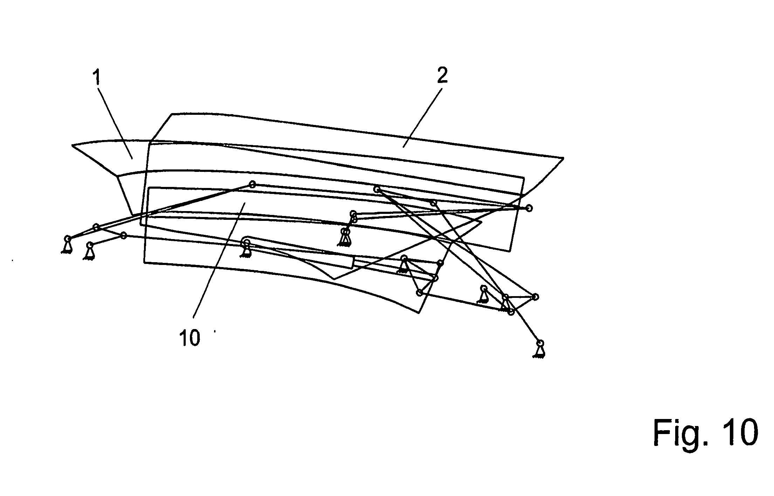

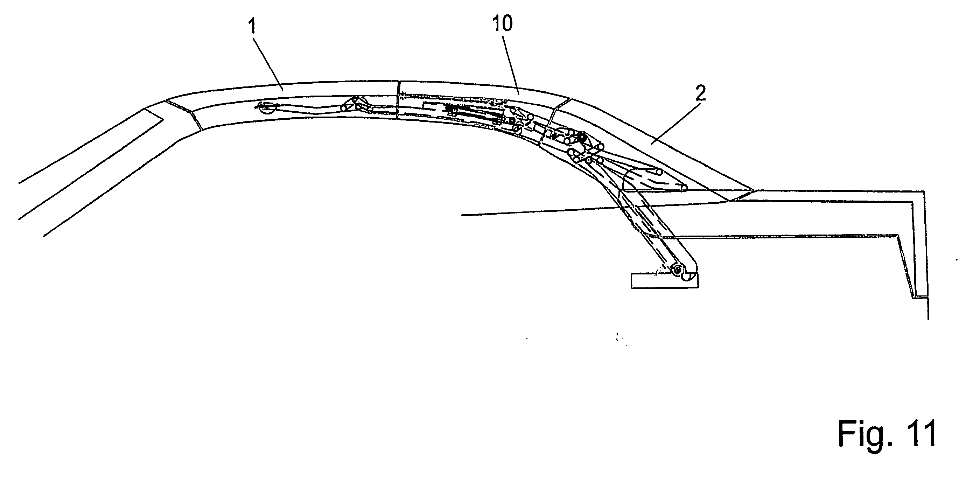

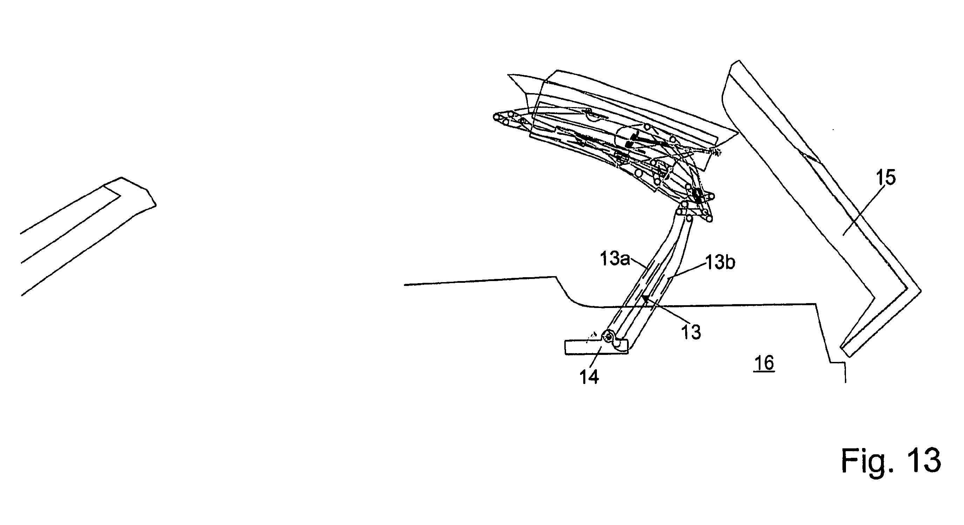

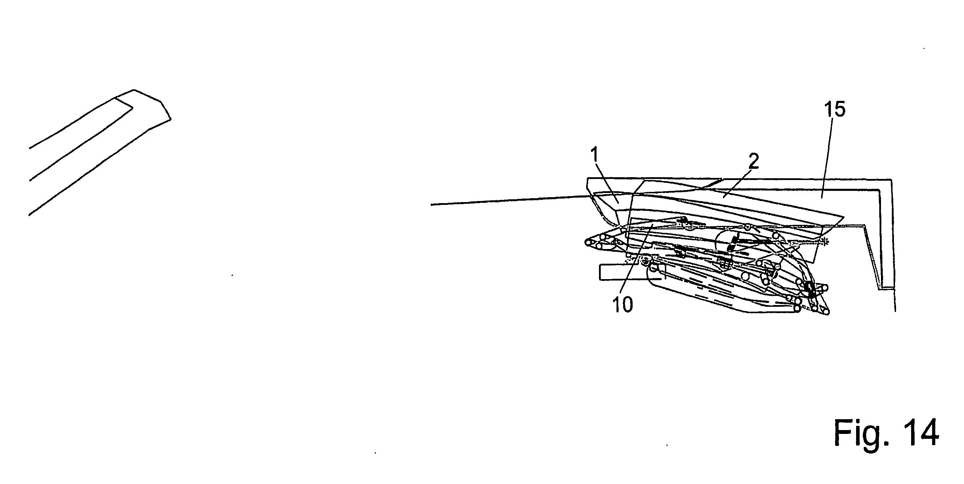

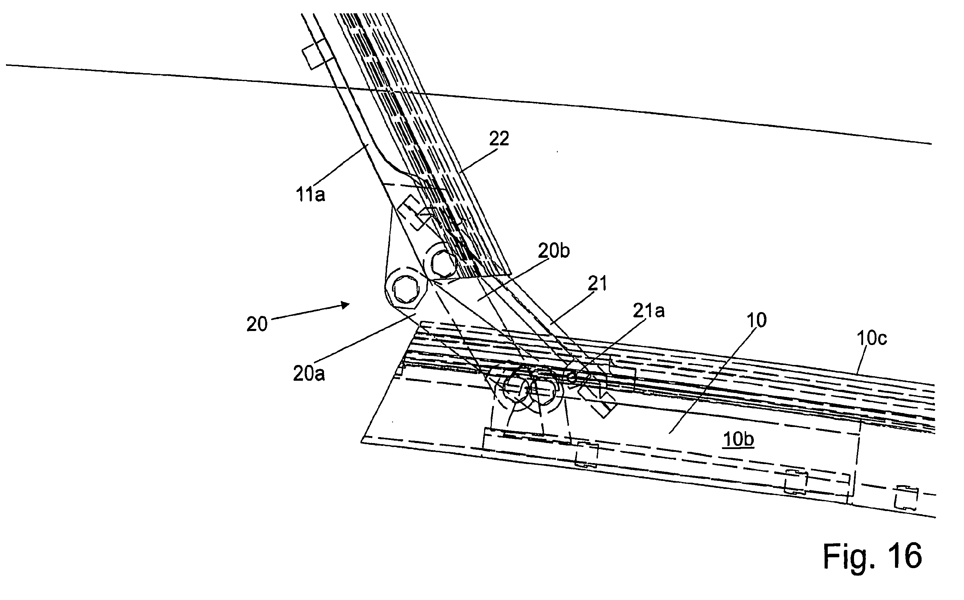

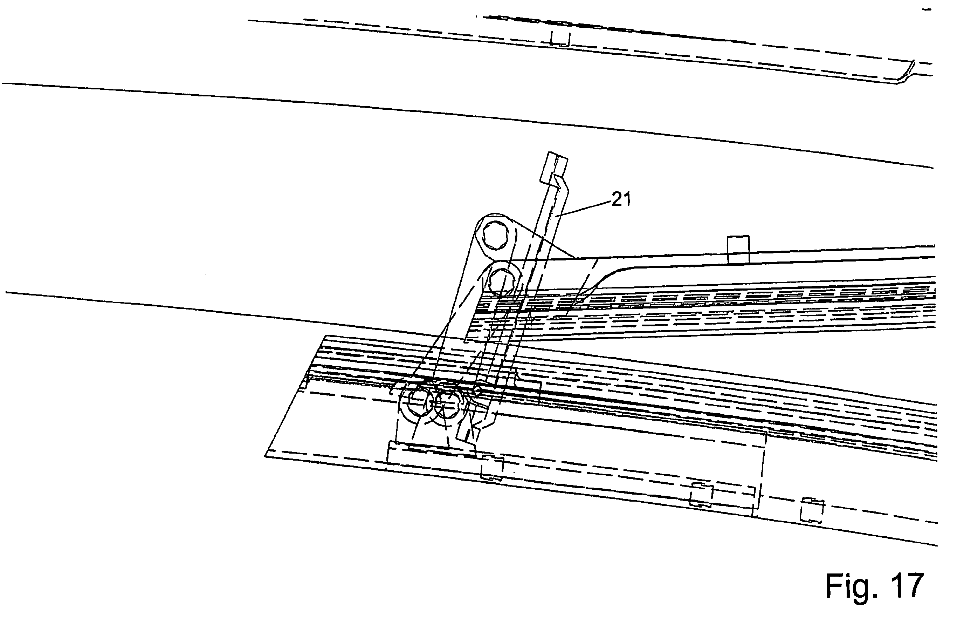

Das erste Ausführungsbeispiel eines Verdecks gemäß Fig. 1 bis Fig. 17 umfaßt ein erstes , vorderes Dachteil 1, ein zweites, hinteres Dachteil 2 sowie ein im geschlossenen Zustand zwischen dem ersten und dem zweiten Dachteil 1, 2 angeordnetes mittleres Dachteil 10. Das mittlere Dachteil 10 ist fest mit einem Mittellenker 10a verbunden, so daß das mittlere Dachteil 10 und der Mittellenker 10a als eine Baueinheit angesehen werden können.

Das erste Dachteil 1 ist über ein vorderes Viergelenk 11 mit dem mittleren Dachteil 10 verbunden, wobei ein Frontlenker 11 b des vorderen Viergelenks gelenkig mit dem Mittellenker 10a verbunden ist und ein außenliegender Lenker 11a des vorderen Viergelenks 11 von außen an dem mittleren Dachteil 10 angelenkt ist. Der außenliegende Lenker liegt in dem geschlossenen Zustand gemäß Fig. 1, Fig. 2 und Fig. 11 außen an dem mittleren Dachteil 10 an, wobei sich der außenliegende Lenker in einer Dachleisten- oder Dachrinnenausnehmung des mittleren Dachteils 10 befindet.

Das zweite, hintere Dachteil 2 ist mittels eines hinteren Viergelenks 12 an dem Mittellenker 10a angelenkt. Das hintere Dachteil 2 umfaßt C-Säulen des Verdecks sowie eine feste Heckscheibe. Das hintere Viergelenk 12 umfaßt einen ersten Hecklenker 12a sowie einen zweiten Hecklenker 12b.

Insgesamt sind somit das erste Dachteil 1 und das zweite Dachteil 2 jeweils über das mittlere Dachteil 10 verschwenkbar, wobei das hintere Dachteil 2 zudem über das vordere Dachteil 1 verschwenkbar ist.

Das vordere Viergelenk 11 und das hintere Viergelenk 12 sind über eine antreibbare Zwangssteuerung 4 miteinander verbunden, so daß eine Stellung des ersten Dachteils 1 einer Stellung des zweiten Dachteils 2 jeweils eineindeutig mechanisch zugeordnet ist.

Die Zwangssteuerung 4 umfaßt ein das vordere Viergelenk 11 ansteuerndes erstes Gestänge 8, ein das hintere Viergelenk 12 ansteuerndes zweites Gestänge 9 und einen Drehlenker 7. Der Drehlenker ist in einem ersten Gelenk 7a drehbar mit dem Mittellenker 10a verbunden. Der Drehlenker 7 ist zudem mittels einer als linearer Hydraulikzylinder ausgebildeten Krafteinleitungseinheit 5, die gegen den Mittellenker 10a abgestützt ist, antreibbar drehbar. Vorliegend ist der Drehlenker als dreistrahliger Lenker ausgebildet. Insbesondere kann unter einem Drehlenker im Sinne der Erfindung aber auch eine Drehscheibe oder Steuerscheibe verstanden werden. Als Steuerscheibe kann insbesondere auch eine universell nutzbare Lochscheibe eingesetzt werden, so daß durch variable Anbringung von Gelenken an der Lochscheibe eine an verschiedene Verdecke anpaßbare Verzögerungssteuerung mittels standardisierter Bauteile vorgesehen sein kann.

Das erste Gestänge 8 umfaßt einen ersten, vorderen Steuerlenker 8a sowie zwei vordere Lenker 8b, 8c, wobei durch eine Verbindung des Frontlenkers 11 b mit dem ersten Steuerlenker 8a mittels der beiden vorderen Lenker 8b, 8c ein besonders großer Schwenkwinkel des vorderen Viergelenks 11 erreichbar ist. Der erste Steuerlenker 8a ist in einem zweiten Gelenk 7b des Drehlenkers 7 mit dem Drehlenker 7 verbunden.

Das zweite Gestänge 9 umfaßt einen zweiten, hinteren Steuerlenker 9a, welcher über einen kleinen Stützlenker 9b gegenüber dem Mittellenker 10a geführt ist. Der zweite Steuerlenker 9a ist an einem Fortsatz des zweiten Hecklenkers 12b angelenkt, so daß das hintere Viergelenk 12 an dem zweiten Steuerlenker 9a angelenkt und über diesen ansteuerbar ist.

Das mittlere Dachteil 10 bzw. der Mittellenker 10a ist über ein Hauptviergelenk 13 mit einer karosseriefest angebrachten Hauptlagereinheit 14 verbunden, wobei das Hauptviergelenk 13 einen ersten Hauptlenker 13a und einen zweiten Hauptlenker 13b umfaßt.

Ein heckseitiger Ablagebereich 16 des Fahrzeugs ist mittels eines Heckelements 15 überdeckbar, wobei das Heckelement 15 zur Freigabe eines Durchtrittsraumes für das abzulegende Verdeck entgegen der Fahrtrichtung aufschwenkbar ist.

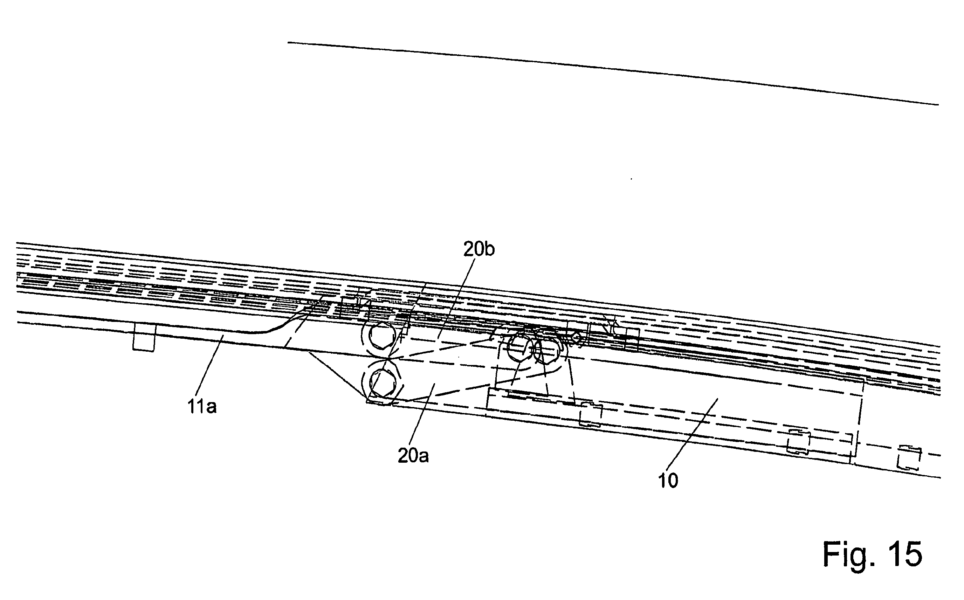

Als besonders vorteilhafte Detaillösung des Verdecks, die insbesondere in Fig. 15 bis Fig. 17 detailliert dargestellt ist, ist der außenliegende Lenker 11a nicht über ein herkömmliches Drehgelenk an dem mittleren Dachteil 10 angelenkt. Vielmehr umfaßt die Anlenkung ein kleines Viergelenk 20, wobei das mittlere Dachteil 10 die Basis des kleinen Viergelenks 20 und der außenliegende Lenker 11 a die Koppel des kleinen Viergelenks 20 bildet. Ein erster Lenker 20a und ein zweiter Lenker 20b des kleinen Viergelenks 20 überkreuzen sich. Eine kurze Abdeckplatte 21 ist um eine eigene Anlenkung 21 a im wesentlichen parallel zu den Lenker 20a, 20b des kleinen Viergelenks 20 mitverschwenkbar, wobei die Abdeckplatte 21 im Bereich ihres ihrer Anlenkung 21 a gegenüberliegenden Endes gleitgeführt ist.

Bei der Auslegung eines Lenkers als außenliegender Lenker ist auf eine Reihe von Besonderheiten Rücksicht zu nehmen. Wie auch im gezeigten Ausführungsbeispiel wird ein außenliegender Lenker 11a vorteilhaft in einer bei den meisten modernen Fahrzeugverdecken ohnehin vorgesehenen Dachleisten-Ausnehmung 10b angeordnet. Die Dachleistenausnehmung 10b ist außerhalb des Bereichs des Lenkers 10a mit einer Dachleistenabdeckung 10c kaschiert. Der außenliegende Lenker 11a umfaßt zweckmäßig eine entsprechende, auf den eigentlichen Lenker aufgesetzte Lenkerkaschierung 22, so daß der Lenker im geschlossenen Verdeckzustand die Erscheinung einer durchgehenden Dachleiste 10c, 22 ermöglicht. Bei einer solchen Anordnung ist allerdings problematisch, daß der Lenker 11a bei einer Schwenkbewegung aufgrund seiner vertieften Unterbringung in der Dachleistenausnehmung 10b an der Dachleistenabdeckung 10c anstoßen würde, zumindest dann, wenn ein großer Schwenkwinkel des Lenkers 11a erforderlich ist. Durch die vorteilhafte Detaillösung der Anlenkung des Lenkers in dem kleinen Viergelenk 20 kann jedoch erreicht werden, daß der Lenker 11a bereits zu Beginn seiner Schwenkbewegung samt seiner Dachleistenkaschierung 22 über seine gesamte Länge aus der Dachleistenausnehmung 10b heraustritt, so daß ein besonders großer Schwenkwinkel ermöglicht ist. Fig. 15 bis Fig. 17 zeigen, daß auf diese Weise ein freier Schwenkwinkel des außenliegenden Lenkers von nahezu 180 Grad ermöglicht ist.

Die kurze, mit dem Viergelenk 20 mitverschwenkbare Abdeckplatte 21 dient im geschlossenen Verdeckzustand lediglich der Überdeckung des Dachleistenbereichs über dem kleinen Viergelenk 20.

Es ist zu erwähnen, daß aus dem Stand der Technik bisher Lösungen bekannt sind, bei denen ein versenkter, außenliegender Lenker mittels einer an einem Dachteil schwenkbar angebrachten, streifenförmigen und eine Dachleistenkaschierung bildenen Klappe abdeckbar ist. Demgegenüber hat die beschriebene Lösung deutliche Vorteile, da zum Beispiel die Dachleistenkaschierung unmittelbar auf dem Lenker festgelegt werden kann.

Das Ausführungbeispiel funktioniert nun wie folgt:
Ausgehend von dem geschlossenen Verdeckzustand gemäß Fig. 1, Fig. 2 und Fig. 11 wird zunächst ein erster Teil einer Verdecköffnungsbewegung eingeleitet. Hierzu wird die Krafteinteitungseinheit 5 betätigt, wodurch der Drehlenker 7 gemäß der Darstellungen entgegen dem Uhrzeigersinn gedreht wird. Aus einem Vergleich der Fig. 1 bis Fig. 10 wird deutlich, daß dabei zunächst hauptsächlich das erste Gestänge 8 durch den Drehlenker betätigt wird, während aufgrund der Stellung des dritten Gelenks 7c zu dem zweiten Gestänge 9 zunächst kaum eine Betätigung des zweiten Gestänges 9, insbesondere in der relevanten Längsrichtung des zweiten, hinteren Steuerlenkers 9a, stattfindet.

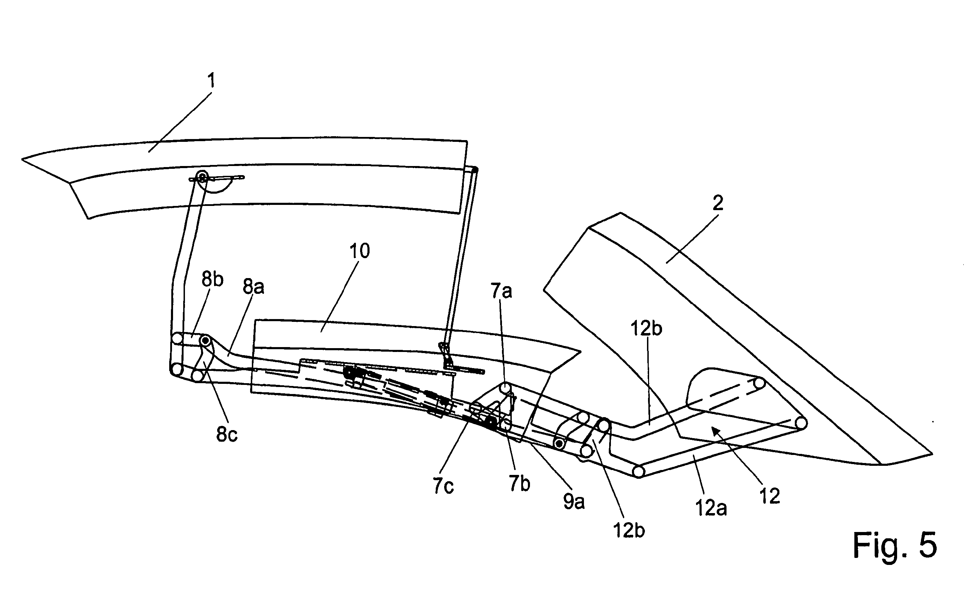

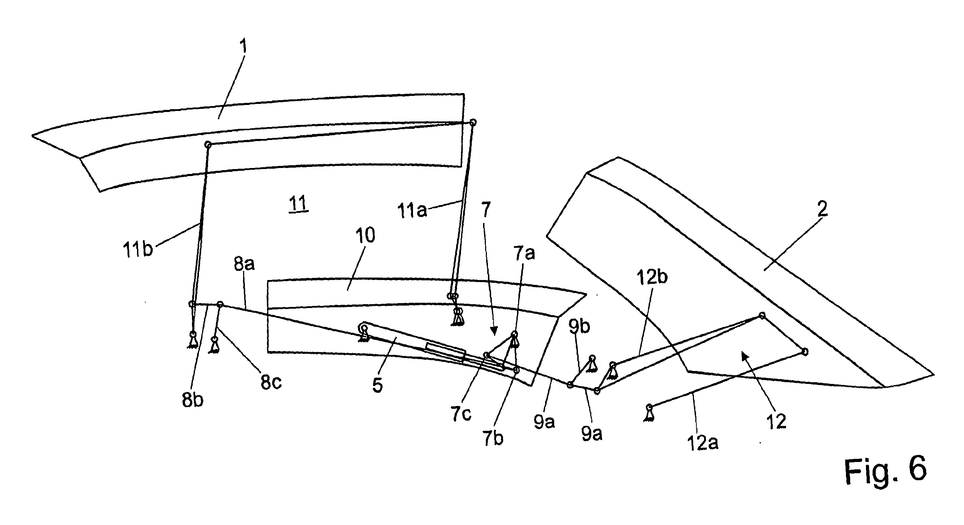

Somit erfolgt zunächst hauptsächlich eine Verschwenkung des vorderen Dachteils 1 über das mittlere Dachteil 10. Die Verschwenkung des vorderen Dachteils 1 ist im Bewegungsablauf in etwa bis zu der in Fig. 5 und Fig. 6 dargestellten Position vorherrschend.

Nachfolgend verlangsamt sich die Relativbewegung des vorderen Dachteils 1, welches bereits wesentlich über das mittlere Dachteil 10 verschwenkt ist. Zugleich nimmt die Bewegung des hinteren Dachteils 2 zu, da nunmehr (etwa ab der in Fig. 5 und Fig. 6 gezeigten Position) eine sehr direkte Umsetzung der Drehbewegung des Drehlenkers 7 in eine längsgerichtete Bewegung des hinteren Steuerlenkers 9a stattfindet. Der beschriebene Bewegungsablauf der beiden Dachteile kann somit als quasi-sequentiell bezeichnet werden.

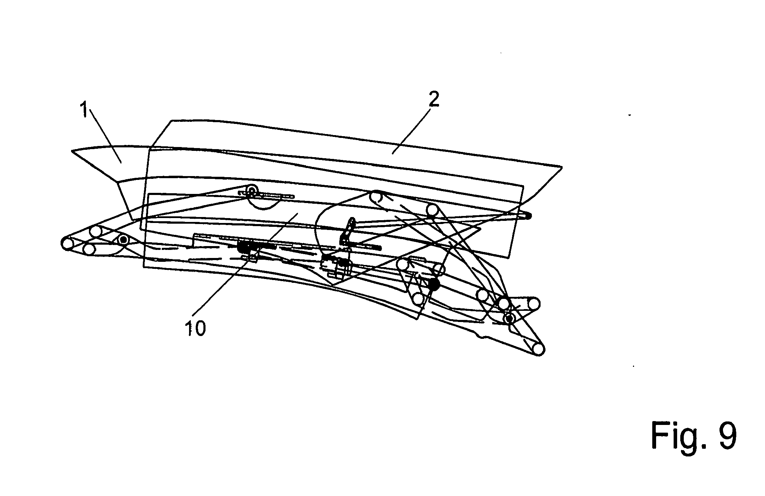

Ein Ende des ersten Teils der Verdecköffnungsbewegung ist bei vollständiger Anordnung der drei Dachteile 1, 2 und 10 zu einem Stapel erreicht (siehe Fig. 9, Fig. 10 und Fig. 12).

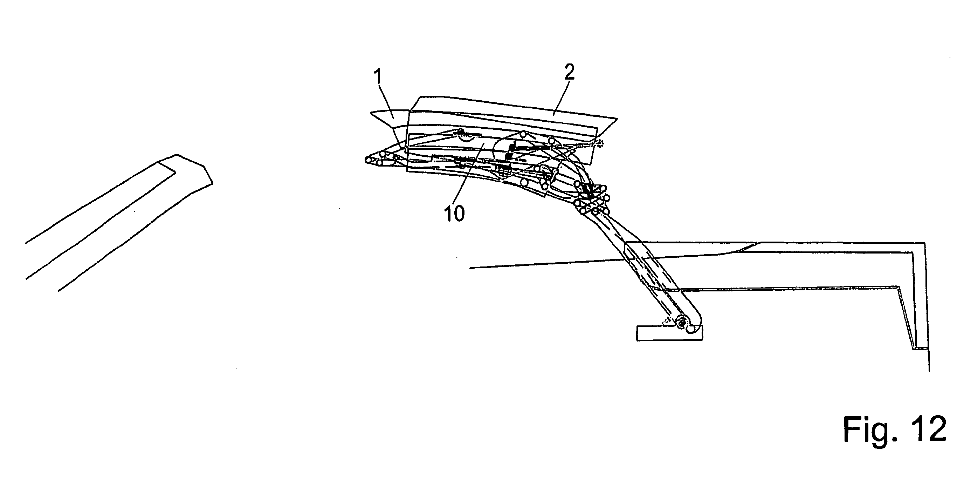

Ein zweiter Teil der Verdecköffnungsbewegung ist in den Gesamtansichten des Verdecks gemäß Fig. 12 bis Fig. 14 dargestellt. Hierbei wird mittels einer mit einer zweiten Antriebsvorrichtung angetriebenen Verschwenkung des Hauptviergelenks 13 das zuvor gebildete Paket der Dachteile 1, 2, 10 in einen heckseitigen Ablagebereich 16 des Fahrzeugs verbracht. Hierzu wird zunächst das Heckelement 15 entgegen der Fahrtrichtung aufgeschwenkt und nachfolgend wieder zugeschwenkt.

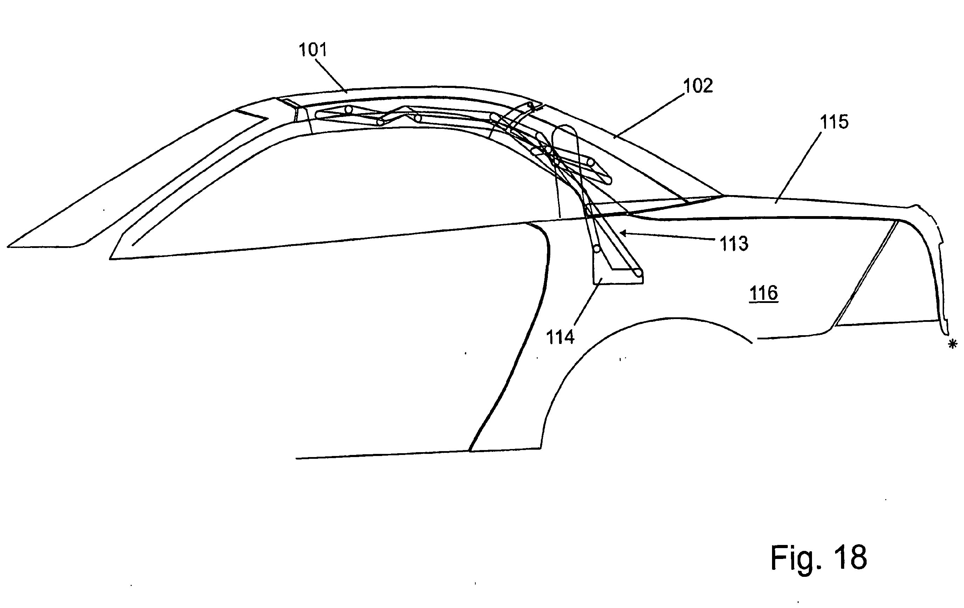

Nachfolgend wird ein zweites Ausführungsbeispiel eines erfindungsgemäßen Verdecks beschrieben:
Das erfindungsgemäße Verdeck gemäß dem zweiten Ausführungsbeispiel umfaßt ein erstes, vorderes Dachteil 101 und ein zweites, hinteres Dachteil 102. Das zweite Dachteil 102 liegt in dem geschlossenen Verdeckzustand gemäß Fig. 18 von oben dichtend auf einem Heckelement 115 auf und umfaßt eine Heckscheibe sowie neben der Heckscheibe befindliche Säulen des Verdecks. Das Heckelement 115 umfaßt einen in Fahrtrichtung vorderen Bereich 115a, der in dem geschlossenen Verdeckzustand innerhalb des Fahrgastraums und somit unterhalb des zweiten Dachteils 102 angeordnet ist. Der Bereich 115a entspricht im wesentlichen einer unterhalb einer Hekcscheibe angeordneten Hutablage in einer herkömmlichen Limousine mit festem Dach.

Das erste, vordere Dachteil ist in dem geschlossenen Verdeckzustand lösbar mit einem Frontscheibenrahmen 130 des Fahrzeugs verbunden.

Ein Hauptlenkergetriebe 113 ist mittels einer Hauptlagereinheit 114 an der Karosserie des Fahrzeugs aufgenommen. Hierdurch ist insbesondere ein Aufbau des Verdecks als separat vorfertigbares Modul ermöglicht, da die Hauptlagereinheit im wesentlichen die einzige zu montierende Verbindung zwischen den beweglichen Dachteilen und dem übrigen Fahrzeug darstellt.

Das Hauptlenkergetriebe ist als Viergelenk ausgebildet, wobei die Hauptlagereinheit 114 bzw. die Karosserie des Fahrzeugs die Basis des Viergelenks bildet. Ein erster Hauptlenker 113a und ein zweiter Hauptlenker 113b bilden die Lenker des Hauptlenkergetriebes bzw. Viergelenks 113. Ein Traglenker 110a bildet die Koppel des Hauplenkergetriebes 113. Der Traglenker 110a erstreckt sich sowohl nach vorne als auch nach hinten über die zur Koppelung des Viergelenks 113 erforderliche Strecke hinweg und dient als Träger für die Dachteile 101 und 102. Der Traglenker 110a entspricht daher im wesentlichen dem Mittellenker 10a des ersten Ausführungsbeispiels. Hieraus wird ersichtlich, daß auch ein mittleres Dachteil zusätzlich an dem Traglenker 110a aufgenommen sein kann.

Das erste Dachteil 101 ist mittels eines ersten Lenkergetriebes 111 an dem Traglenker 110a in seinem frontseitigen Bereich aufgenommen, wobei das erste Lenkergetriebe vorliegend als Viergelenk ausgebildet ist und einen ersten Frontlenker 111a und einen zweiten Frontlenker 111b umfaßt. Das erste Dachteil 101 bzw. ein mit dem ersten Dachteil 101 fest verbundener Lenker bildet die Koppel des ersten Lenkergetriebes 111.

Das zweite Dachteil 102 ist mittels eines zweiten Lenkergetriebes 112 an dem Traglenker 110a in seinem heckseitigen Bereich aufgenommen, wobei das zweite Lenkergetriebe 112 vorliegend als Viergelenk ausgebildet ist und einen ersten Hecklenker 112a und einen zweiten Hecklenker 112b umfaßt. Das zweite Dachteil 102 bzw. ein mit dem zweiten Dachteil 102 fest verbundener Lenker bildet die Koppel des zweiten Lenkergetriebes 112.

Ein Steuerlenker 104 ist jeweils an dem ersten Frontlenker 111a und dem zweiten Hecklenker 112 b angelenkt. Hierdurch ist eine Zwangssteuerung 104 gegeben, die das erste Lenkergetriebe 111 und das zweite Lenkergetriebe 112 zwangsgesteuert miteinander verbindet. Insgesamt ist somit eine zwangsgesteuerte Lenkerkette gebildet, die den ersten und den zweiten Frontlenker 111a, 111b, das erste Dachteil 101, den ersten und den zweiten Hecklenker 112a, 112b, das zweite Dachteil 102, den Traglenker 110a und die Zwangssteuerung 104 umfaßt. Alternativ zur Ausbildung der Zwangssteuerung 104 als einfacher Steuerlenker 104 kann auch eine aufwendigere Mechanik gemäß dem ersten Ausführungsbeispiel als Zwangssteuerung vorgesehen sein, wie etwa die dort gezeigte Zwangssteuerung 4 mit der integrierten Steuervorrichtung 6 zur Verzögerung der Relativbewegung der Dachteile 101, 102.

Eine Antriebseinrichtung (nicht dargestellt) für die Relativbewegeung der Dachteile 101, 102 zueinander kann auf einfache Weise als lineare Krafteinleitungseinheit vorgesehen sein, die gegen zwei geeignete Lenker der zuvor beschriebenen zwangsgesteuerten Lenkerkette abgestützt ist.

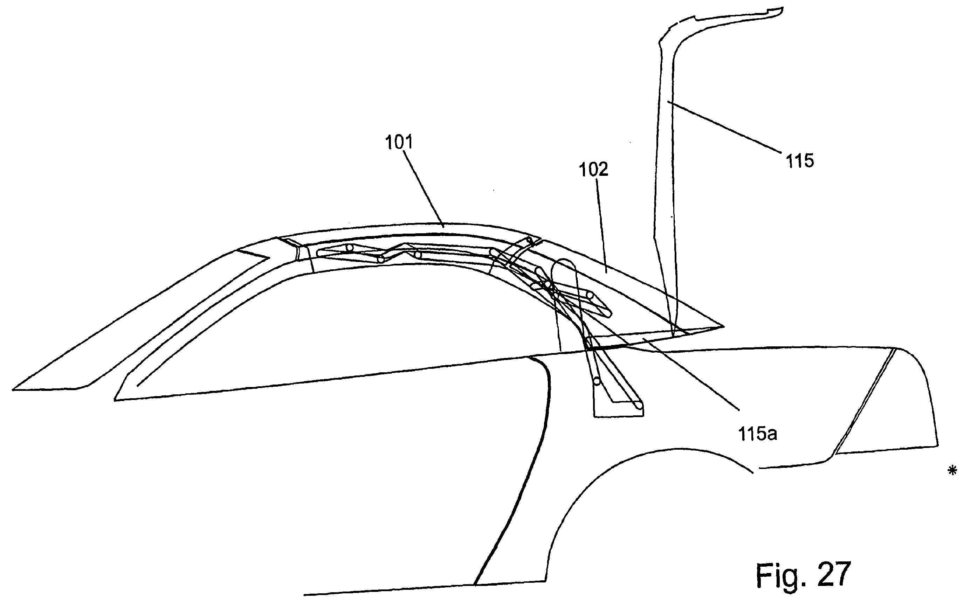

Im vorliegenden Ausführungsbeispiel ist das Heckelement zweiteilig ausgebildet, wobei ein Gelenk zwischen dem Hutablagenbereich 115a und dem übrigen Heckelement 115 vorgesehen ist. Hierdurch ist eine besonders große, in Fahrtrichtung aufschwenkbare Kofferraumklappe ausgebildet, wie insbesondere aus Fig. 27 ersichtlich ist. Diese Auftrennung des Heckelements im Bereich der Hutablage korrespondiert allerdings in keiner Weise mit der aus dem Stand der Technik bekannten separat verschwenkbaren Hutablage zur Freigabe eines Bewegungsraumes für das Verdeck. In der geschlossenen Verdeckanordnung gemäß Fig. 18 und Fig. 27 kann der Hutablagenbereich 115a nicht verschwenkt werden.

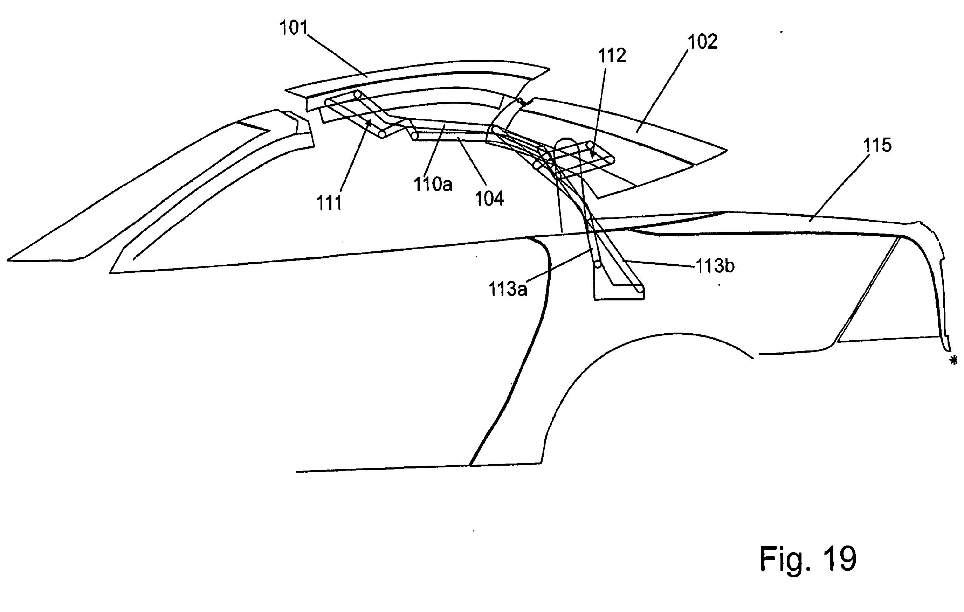

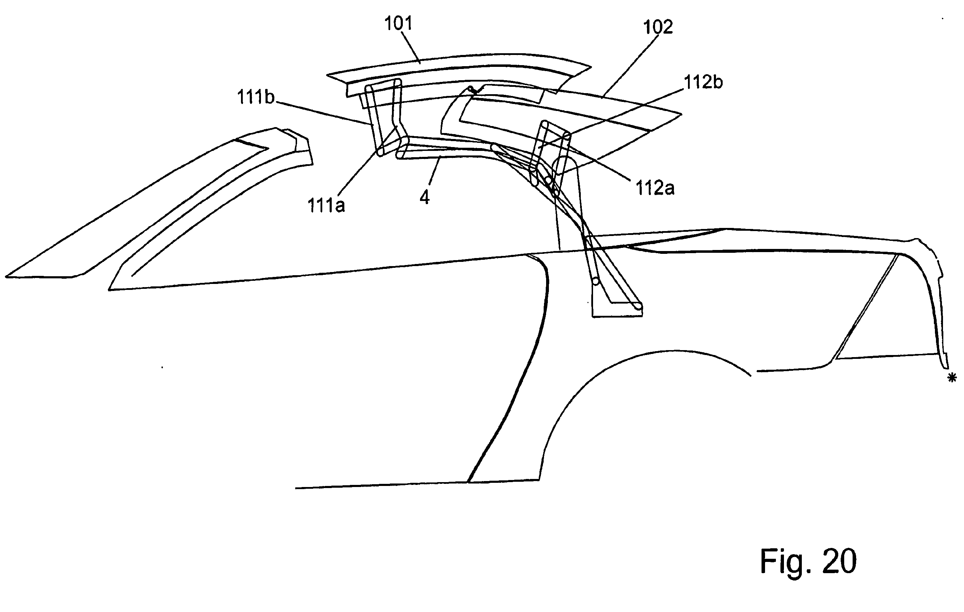

Die Erfindung funktioniert nun wie folgt:
Ausgehend von der geschlossenen Verdeckposition gemäß Fig. 18 wird zunächst mittels einer ersten Krafteinleitungeinheit (nicht dargestellt) eine erste Teilbewegung der Dachöffnung eingeleitet, wobei das Hauptlenkergetriebe 113 eine unveränderte Position behält. Aus Fig. 19 bis Fig. 21 ist ersichtlich, daß zunächst durch die angetriebene Bewegung der zuvor beschriebenen zwangsgesteuerten Lenkerkette das zweite Dachteil 102 in Fahrtrichtung verschwenkt wird, wobei es von dem Heckelement in abhebt und in Fahrtrichtung und nach oben von dem Heckelement wegbewegt wird.

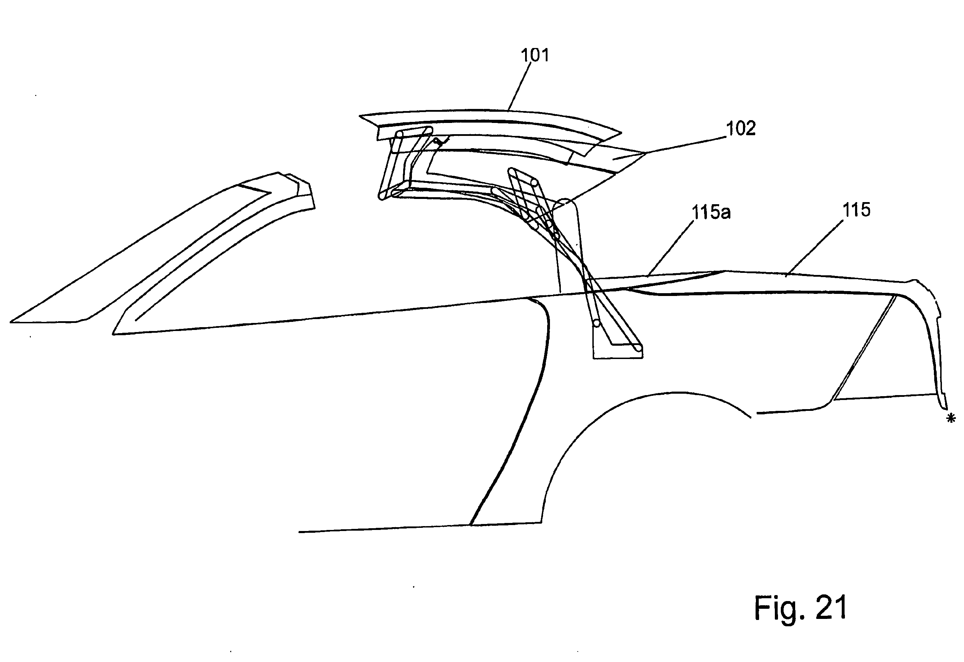

Zugleich wird das erste Dachteil 101 von dem Frontscheibenrahmen weg entgegen der Fahrtrichtung nach hinten verschwenkt, so daß sich die Dachteile 101, 102 aufeinander zu bewegen, wobei sie im wesentlichen ihre räumliche Orientierung beibehalten. Das erste, vordere Dachteil 101 wird dabei über das zweite, hintere Dachteil 102 verschwenkt, bis eine Paketstellung der Dachteile gemäß Fig. 21 erreicht ist. Das Dachteilpaket ist über das Hauptlenkergetriebe 113 mit dem Fahrzeug verbunden.

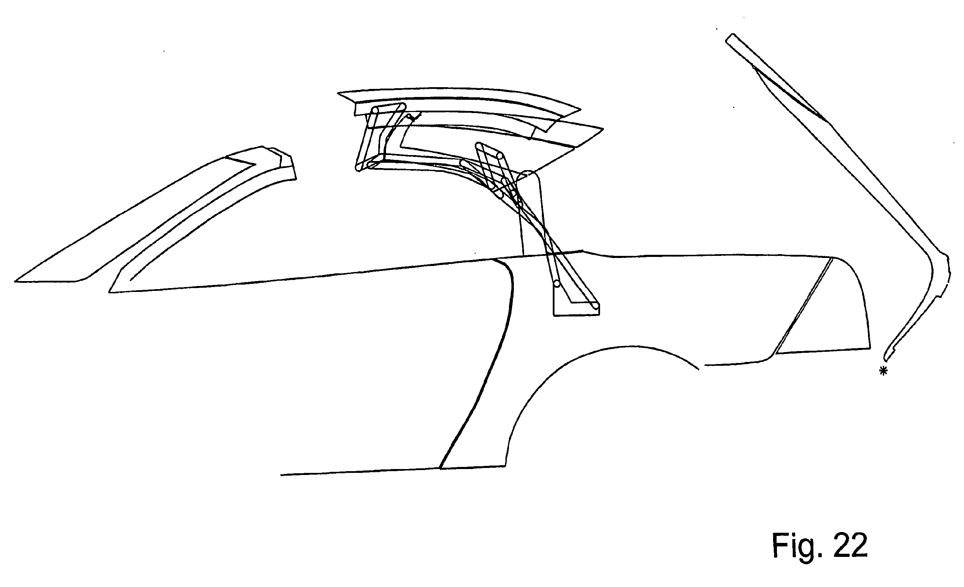

Nachfolgend (siehe Fig. 22) wird das Heckelement 115 entgegen der Fahrtrichtung aufgeschwenkt, wobei insbesondere der Bereich 115a des Heckelements 115 einstückig mitverschwenkt wird. Dies ist durch die zuvor beschriebene Bewegung des zweiten Dachteils 102 ermöglicht, wodurch der Bewegungsraum für das Heckelement 115 freigegeben wurde.

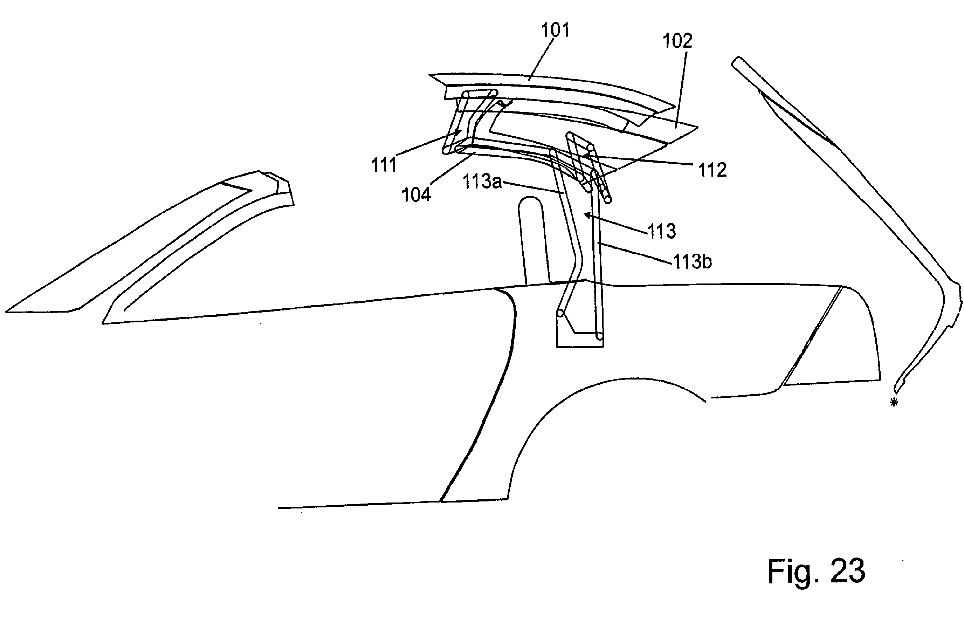

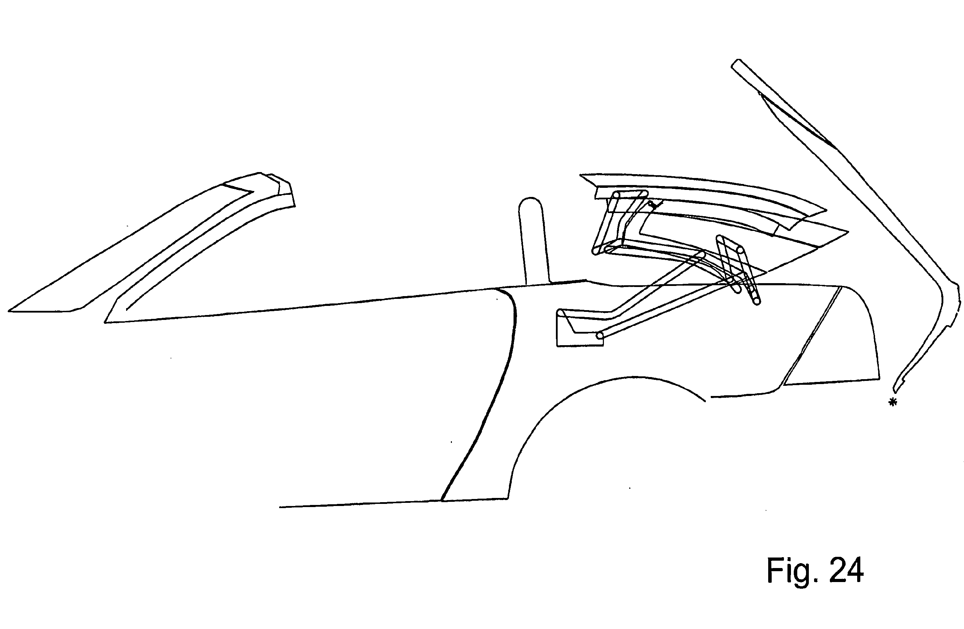

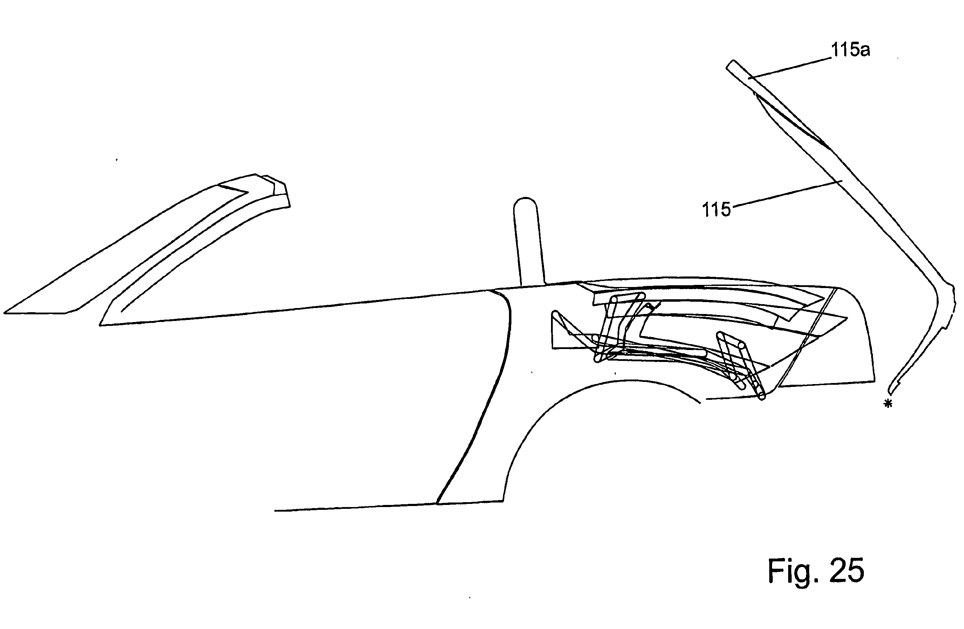

Nachdem somit ein heckseitiger Ablagebereich 116 für das Verdeck freigegeben wurde, wird das Hauptlenkergetriebe 113 mittels einer zweiten Antriebsvorrichtung (nicht dargestellt) bewegt. Gemäß den in Fig. 23 bis Fig. 25 gezeigten Bewegungsschritte wird dabei das Dachteilpaket auf einer bogenförmigen Bahnkurve in den heckseitigen Ablagebereich 116 verbracht.

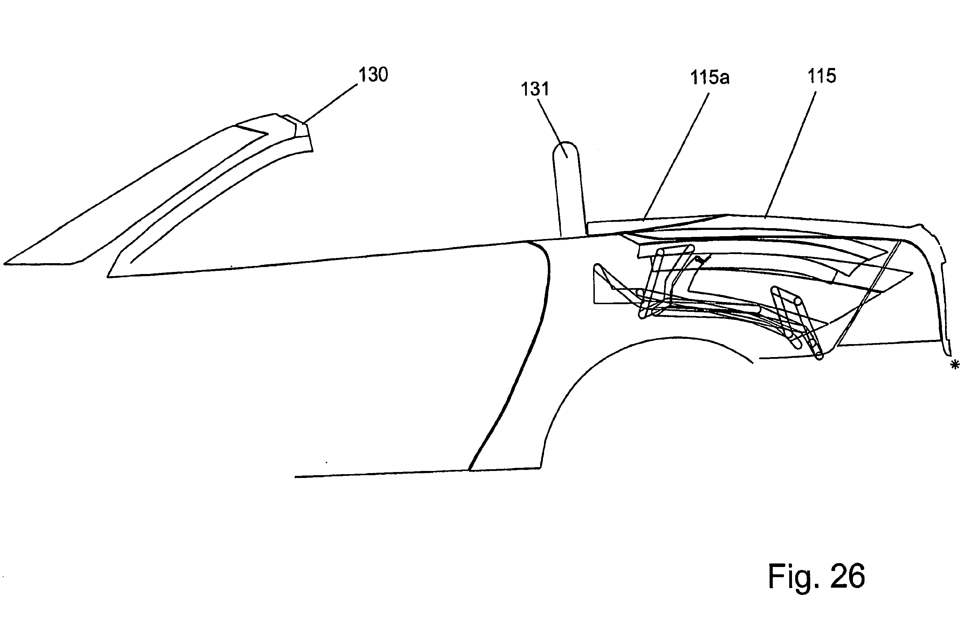

Nachfolgend (siehe Fig. 26) wird das Heckelement 115 wieder geschlossen, wobei es das abgelegte Dach überdeckt. Insbesondere schließt der vordere Bereich 115a des Heckelements 115 wie schon im geschlossenen Verdeckzustand an eine hinterste Sitzlehne 131 an.

Aus dem geöffneten Verdeckzustand gemäß Fig. 26 ist ersichtlich, daß unterhalb des zuunterst angeordneten zweiten Dachteils 102 ein nutzbares Kofferraumvolumen verbleibt.

Der Schließvorgang des Verdecks erfolgt in Umkehr der zuvor beschriebenen Kinematik.

## Patentansprüche

1. Verdeck für ein Cabriolet-Fahrzeug, umfassend
ein erstes Dachteil (101),
ein zweites Dachteil (102) und
ein öffnungsfähiges Heckelement (115),
wobei das erste Dachteil (101) in einem geschlossenen Verdeckzustand in Fahrtrichtung vor dem zweiten Dachteil (102) angeordnet ist,
wobei das zweite Dachteil (102) in dem geschlossenen Verdeckzustand von oben auf dem Heckelement (115) aufliegt,
wobei das erste Dachteil und das zweite Dachteil an einem Hauptlenkergetriebe (113) aufgenommen sind,
wobei das Hauptlenkergetriebe (113) an einer Karosserie des Fahrzeugs bewegbar gelagert ist,
wobei das erste Dachteil (101) über das zweite Dachteil (102) verlagerbar ist, **dadurch gekennzeichnet, daß**
das erste Dachteil (101) und das zweite Dachteil (102) gegensinnig zueinander und jeweils relativ zu dem Hauptlenkergetriebe (113) verlagerbar sind.

2. Verdeck nach Anspruch 1, **dadurch gekennzeichnet, dass** das zweite Dachteil (102) in dem geschlossenen Verdeckzustand dichtend von oben auf dem Heckelement (115) aufliegt.

3. Verdeck nach Anspruch 1 oder 2, **dadurch gekennzeichnet, dass** das zweite Dachteil (102) in einem ersten Abschnitt einer Verdecköffnungsbewegung von dem Heckelement (115) abhebbar ist.

4. Verdeck nach einem der Ansprüche 1 bis 3, **dadurch gekennzeichnet, dass** das Heckelement (115) einen Ablagebereich für das Verdeck überdeckt und entgegen der Fahrtrichtung aufschwenkbar ist.

5. Verdeck nach Anspruch 4, **dadurch gekennzeichnet, dass** die Verlagerung des ersten Dachteils (101) mittels eines das erste Dachteil (101) mit dem Hauptlenkergetriebe (113) verbindenen ersten Lenkergetriebes (111) erfolgt.

6. Verdeck nach einem der Ansprüche 1 bis 5, **dadurch gekennzeichnet, dass** das zweite Dachteil (102) gegenüber dem Hauptlenkergetriebe (113) verlagerbar ist.

7. Verdeck nach Anspruch 6, **dadurch gekennzeichnet, dass** die Verlagerung des zweiten Dachteils (102) mittels eines das zweite Dachteil (102) mit dem Hauptlenkergetriebe (113) verbindenen zweiten Lenkergetriebes (112) erfolgt.

8. Verdeck nach einem der Ansprüche 1 bis 7, **dadurch gekennzeichnet, dass** zumindest das erste Dachteil (101) oder das zweite Dachteil (102) an einem Traglenker (110a) des Hauptlenkergetriebes (113) aufgenommen ist.

9. Verdeck nach einem der Ansprüche 1 bis 8, **dadurch gekennzeichnet, dass** das erste Dachteil (101) im wesentlichen parallel über das zweite Dachteil (102) verlagerbar ist.

10. Verdeck nach einem der Ansprüche 1 bis 9, **dadurch gekennzeichnet, dass** das erste Dachteil (101) und das zweite Dachteil (102) mittels einer Zwangssteuerung (104) miteinander verbunden sind, wobei die Dachteile (101, 102) mittels der Zwangssteuerung (104) zwangsgesteuert zueinander bewegbar sind.

11. Verdeck nach Anspruch 10, **dadurch gekennzeichnet, dass** die Zwangssteuerung eine mechanische Steuervorrichtung (6) umfasst,
wobei die Bewegung des zweiten Dachteils (102) gegenüber der Bewegung des ersten Dachteils (101) mittels der Steuervorrichtung (6) verzögerbar ist

12. Verdeck nach Anspruch 11, **dadurch gekennzeichnet, dass** die Steuervorrichtung (6) einen Drehlenker (7) umfasst.

13. Verdeck nach Anspruch 12, **dadurch gekennzeichnet, dass** der Drehlenker (7) durch eine Krafteinleitungseinheit (5) antreibbar ist.

14. Verdeck nach Anspruch 12 oder 13, **dadurch gekennzeichnet, dass** der Drehlenker (7) mit dem ersten Dachteil (1, 101) durch ein erstes Gestänge (8) verbunden ist, und dass der Drehlenker (7) mit dem zweiten Dachteil (2, 102) durch ein zweites Gestänge (9) verbunden ist.

15. Verdeck nach einem der Ansprüche 1 bis 14, **dadurch gekennzeichnet, dass** das erste Dachteil (101) in einem geschlossenen Verdeckzustand an einem Frontscheibenrahmen (130) des Fahrzeugs lösbar festlegbar ist.

16. Verdeck nach einem der Ansprüche 1 bis 15, **dadurch gekennzeichnet, dass** ein drittes Dachteil vorgesehen ist, wobei das dritte Dachteil in einem geschlossenen Verdeckzustand als mittleres Dachteil zwischen dem ersten Dachteil und dem zweiten Dachteil angeordnet ist.

17. Verdeck nach einem der Ansprüche 1 bis 14, **dadurch gekennzeichnet, dass** ein drittes Dachteil vorgesehen ist, wobei das dritte Dachteil in einem geschlossenen Verdeckzustand vor dem ersten Dachteil (101) angeordnet ist, so dass das dritte Dachteil ein vorderes Dachteil, das zweite Dachteil (102) ein hinteres Dachteil und das erste Dachteil (101) ein mittleres Dachteil eines Verdecks ausbildet.

18. Verdeck nach Anspruch 17, **dadurch gekennzeichnet, dass** das dritte Dachteil an dem ersten Dachteil (101) bewegbar aufgenommen ist.

## Claims

1. A folding top for a cabriolet vehicle, comprising
a first roof part (101),
a second roof part (102) and
an openable rear element (115),
the first roof part (101) being arranged in front of the second roof part (102), as seen in the direction of travel, when the folding top is closed,
the second roof part (102) resting on the rear element (115) when the folding top is closed,
the first roof part and the second roof part being mounted on a main-link mechanism (113),
wherein the main-link mechanism (113) is mounted in a movable manner on a bodywork of the vehicle,
wherein the first roof part (101) can be displaced over the second roof part (102), and
wherein the first roof part (101) and the second roof part (102) can be displaced in opposite directions to one another and relative to the main-link mechanism (113) respectively.

2. The folding top as claimed in claim 1, **characterized in that** the second roof part (102) rests on the rear element (115) with sealing action from above when the folding top is closed.

3. The folding top as claimed in claim 1 or 2, **characterized in that**, in a first stage of a folding-top opening movement, the second roof part (102) can be raised up from the rear element (115).

4. The folding top as claimed in one of claims 1 to 3, **characterized in that** the rear element (115) covers over a stowage region for the folding top and can be pivoted open counter to the direction of travel.

5. The folding top as claimed in claim 4, **characterized in that** the first roof part (101) is displaced by means of a first link mechanism (111) which connects the first roof part (101) to the main-link mechanism (113).

6. The folding top as claimed in one of claims 1 to 5, **characterized in that** the second roof part (102) can be displaced in relation to the main-link mechanism (113).

7. The folding top as claimed in claim 6, **characterized in that** the second roof part (102) is displaced by means of a second link mechanism (112) which connects the second roof part (102) to the main-link mechanism (113).

8. The folding top as claimed in one of claims 1 to 7, **characterized in that** at least the first roof part (101) or the second roof part (102) is mounted on a carrying link (110a) of the main-link mechanism (113).

9. The folding top as claimed in one of claims 1 to 8, **characterized in that** the first roof part can be pivoted substantially parallel over the second roof part (102).

10. The folding top as claimed in one of claims 1 to 9, **characterized in that** the first roof part (101) and the second roof part (102) are connected to one another by a positive control means (104), it being possible for the roof parts (101, 102) to be moved in a positively controlled manner in relation to one another by the positive control means (104).

11. The folding top as claimed in claim 10, **characterized in that** the positive control means comprises a mechanical control device (6), it being possible to delay the movement of the second roof part (102) in relation to the movement of the first roof part (101) by means of the control device (6).

12. The folding top as claimed in claim 11, **characterized in that** the control device (6) comprises a rotary link (7).

13. The folding top as claimed in claim 12, **characterized in that** the rotary link (7) can be driven by a force-introduction unit (5).

14. The folding top as claimed in claim 12 or 13, **characterized in that** the rotary link (7) is connected to the first roof part (1, 101) by a first linkage (8), and **in that** the rotary link (7) is connected to the second roof part (2, 102) by a second linkage (9).

15. The folding top as claimed in one of claims 1 to 14, **characterized in that** the first roof part (101) can be secured in a releasable manner on a windshield frame (130) of the vehicle when the folding top is closed.

16. The folding top as claimed in one of claims 1 to 15, **characterized in that** a third roof part is provided, the third roof part being arranged, as a central roof part, between the first roof part and the second roof part when the folding top is closed.

17. The folding top as claimed in one of claims 1 to 14, **characterized in that** a third roof part is provided, the third roof part being arranged in front of the first roof part (101) when the folding top is closed, with the result that the third roof part forms a front roof part, the second roof part (102) forms a rear roof part, and the first roof part (101) forms a central roof part, of a folding top.

18. The folding top as claimed in claim 17, **characterized in that** the third roof part is mounted in a movable manner on the first roof part (101).

## Revendications

1. Capote pour véhicule cabriolet, comprenant
une première pièce de toit (101),
une deuxième pièce de toit (102) et
un élément arrière (115) pouvant s'ouvrir,
la première pièce de toit (101) étant disposée en avant de la deuxième pièce de toit (102), par référence au sens de roulement, lorsque la capote est fermée,
la deuxième pièce de toit (102) reposant depuis le haut sur l'élément arrière (115) lorsque la capote est fermée,
la première pièce de toit et la deuxième pièce de toit étant reçues sur un mécanisme principal à bras (113),
le mécanisme principal à bras (113) étant monté de façon mobile sur une carrosserie de véhicule,
la première pièce de toit (101) pouvant être déplacée par dessus la deuxième pièce de toit (102), et
la première pièce de toit (101) et la deuxième pièce de toit (102) étant déplaçables dans des sens opposés l'un à l'autre et chacune par rapport au mécanisme principal à bras (113).

2. Capote selon la revendication 1, **caractérisée en ce que** la deuxième pièce de toit (102) repose de façon étanche, depuis le haut, sur l'élément arrière (115) lorsque la capote est fermée.

3. Capote selon la revendication 1 ou 2, **caractérisée en ce que** la deuxième pièce de toit (102) peut être soulevée de l'élément arrière (115) dans une première partie d'un mouvement d'ouverture de capote.

4. Capote selon l'une des revendications 1 à 3, **caractérisée en ce que** l'élément arrière (115) recouvre une région de réception de la capote et est apte à pivoter dans le sens opposé au sens de roulement.

5. Capote selon la revendication 4, **caractérisée en ce que** le déplacement de la première pièce de toit (101) est effectué au moyen d'un premier mécanisme à bras (111) reliant la première pièce de toit (101) au mécanisme principal à bras (113).

6. Capote selon l'une des revendications 1 à 5, **caractérisée en ce que** la deuxième pièce de toit (102) est déplaçable par rapport au mécanisme principal à bras (113).

7. Capote selon la revendication 6, **caractérisée en ce que** le déplacement de la deuxième pièce de toit (102) est effectué au moyen d'un deuxième mécanisme à bras (112) reliant la deuxième pièce de toit (102) au mécanisme principal à bras (113).

8. Capote selon l'une des revendications 1 à 7, **caractérisée en ce que** au moins la première pièce de toit (101) ou la deuxième pièce de toit (102) est reçue sur un bras de support (110a) du mécanisme principal à bras (113).

9. Capote selon l'une des revendications 1 à 8, **caractérisée en ce que** la première pièce de toit (101) est déplaçable sensiblement parallèlement au-dessus de la deuxième pièce de toit (102).

10. Capote selon l'une des revendications 1 à 9, **caractérisée en ce que** la première pièce de toit (101) et la deuxième pièce de toit (102) sont reliées l'une à l'autre au moyen d'une commande forcée (104), les pièces de toit (101, 102) étant forcées à se déplacer l'une par rapport à l'autre au moyen de la commande forcée (104).

11. Capote selon la revendication 10, **caractérisée en ce que** la commande forcée comporte un dispositif de commande mécanique (6), le mouvement de la deuxième pièce de toit (102) étant retardé par rapport au mouvement de la première pièce de toit (101) au moyen du dispositif de commande (6).

12. Capote selon la revendication 11, **caractérisée en ce que** le dispositif de commande (6) comporte un bras rotatif (7).

13. Capote selon la revendication 12, **caractérisée en ce que** le bras rotatif (7) peut être entraîné par une unité dynamique (5).

14. Capote selon la revendication 12 ou 13, **caractérisée en ce que** le bras rotatif (7) est relié à la première pièce de toit (1, 101) par un premier ensemble de tringles (8), et **en ce que** le bras rotatif (7) est relié à la deuxième pièce de toit (2,102) par un deuxième ensemble de tringles (9).

15. Capote selon l'une des revendications 1 à 14, **caractérisée en ce que** la première pièce de toit (101) peut être fixée de façon amovible à un montant de pare-brise (130) du véhicule lorsque la capote est fermée.

16. Capote selon l'une des revendications 1 à 15, **caractérisée en ce qu'**il est prévu une troisième pièce de toit, la troisième pièce de toit étant disposée en tant que pièce de toit médiane entre la première pièce de toit et la deuxième pièce de toit lorsque la capote est fermée.

17. Capote selon l'une des revendications 1 à 14, **caractérisée en ce qu'**il est prévu une troisième pièce de toit, la troisième pièce de toit étant disposée en avant de la première pièce de toit (101) lorsque la capote est fermée de sorte que la troisième pièce de toit forme une pièce de toit avant, la deuxième pièce de toit (102) forme une pièce de toit arrière et la première pièce de toit (101) forme une pièce de toit médiane d'une capote.

18. Capote selon la revendication 17, **caractérisée en ce que** la troisième pièce de toit est reçue de façon mobile sur la première pièce de toit (101).
